(19) Europäisches Patentamt
European Patent Office
Office européen des brevets

(11) EP 4 502 707 A1

(12) EUROPEAN PATENT APPLICATION
published in accordance with Art. 153(4) EPC

(43) Date of publication:
05.02.2025 Bulletin 2025/06

(21) Application number: 22935782.7

(22) Date of filing: 27.12.2022

(51) International Patent Classification (IPC):
G02B 27/02 (2006.01)    G02B 5/18 (2006.01)

(52) Cooperative Patent Classification (CPC):
G02B 5/18; G02B 27/02

(86) International application number:
PCT/JP2022/048394

(87) International publication number:
WO 2023/188657 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.03.2022 JP 2022060582

(71) Applicant: Panasonic Intellectual Property
Management Co., Ltd.
Osaka-shi, Osaka 540-6207 (JP)

(72) Inventors:
• KUZUHARA, Satoshi
  Kadoma-shi, Osaka 571-0057 (JP)
• HASHIYA, Akira
  Kadoma-shi, Osaka 571-0057 (JP)
• MINAMI, Kazuhiro
  Kadoma-shi, Osaka 571-0057 (JP)

(74) Representative: Eisenführ Speiser
Patentanwälte Rechtsanwälte PartGmbB
Gollierstraße 4
80339 München (DE)

(54) OPTICAL SYSTEM AND IMAGE DISPLAY DEVICE

(57) An optical system and an image display device which can improve a usage efficiency of an image light ray from a display element are provided. The optical system includes: a light guide 4 for guiding an image light ray to a field of view region of a user as a virtual image. The light guide 4 includes a diffraction structure region 61 constituting a surface- relief diffraction grating dividing the image light ray propagating in a first propagation direction intersecting a thickness direction of a body into a plurality of image light rays propagating in a second propagation direction intersecting the first propagation direction, in the first propagation direction. The diffraction structure region 61 includes a first diffraction structure 611, and a second diffraction structure 612 on an opposite side of the first diffraction structure 611 from an in-coupling region in the first propagation direction. A grating height of the first diffraction structure 611 is greater than a grating height of the second diffraction structure 612. A grating width of the first diffraction structure 611 is greater than a grating width of the second diffraction structure 612.

FIG. 3

# Description

## TECHNICAL FIELD

The present disclosure relates to optical systems and image display devices.

## BACKGROUND ART

Patent Literature 1 discloses, as an image display device, a viewing optics assembly (VOA) which may be used to present a digital or virtual image to a viewer. The VOA includes a projector and an eyepiece that may be worn by a viewer. The eye piece includes one or more eye piece layers. Each eyepiece layer includes a planar waveguide and may include an incoupling grating, an orthogonal pupil expander region, and an exit pupil expander region. The projector projects image light onto the incoupling grating 107 in the eyepiece. The incoupling grating couples the image light from the projector into the planar waveguide propagating in a direction toward the orthogonal pupil expander region. The planar waveguide propagates the image light in the horizontal direction by total internal reflection. The orthogonal pupil expander region also includes a diffractive element that multiplies and redirects image light from the incoupling region propagating toward the exit pupil expander region. The exit pupil expander region includes a diffractive element that outcouples and directs a portion of the image light propagating in the planar waveguide toward a viewer's eye.

## CITATION LIST

## PATENT LITERATURE

PATENT LITERATURE 1: US 2019-137777 A1

## SUMMARY OF INVENTION

## TECHNICAL PROBLEM

Patent Literature 1 discloses that to reduce a decrease in amount of emitted light depending on a position, a height or a depth of a diffraction element in a diffraction structure is changed as a function of a position to improve uniformity of light.

The image light has a width and therefore an angle of propagation of the image light inside the waveguide by total internal reflection (i.e., a propagation angle) may vary. A light ray which is the largest in the propagation angle in the image light and a light ray which is the smallest in the propagation angle in the image light may take different actions for the same diffraction grating. Therefore, to improve a usage efficiency of the image light from a display element such as a projector, it is required to consider a variation in the propagation angle. Unfortunately, Patent Literature 1 does not provide any consideration about such a variation of the propagation angle.

The present disclosure provides an optical system and an image display device which can improve a usage efficiency of an image light ray from a display element.

## SOLUTION TO PROBLEM

An optical system according to an aspect of the present disclosure includes: a light guide for guiding an image light ray which is output from a display element and forms an image, to a field of view region of a user as a virtual image. The light guide includes: a body having a plate shape; an in-coupling region formed at the body and allowing the image light ray to enter the body so that the image light ray propagates inside the body; and a reproduction region formed at the body and including a diffraction structure region which constitutes a surface-relief diffraction grating dividing an image light ray propagating in a first propagation direction intersecting a thickness direction of the body into a plurality of image light rays propagating in a second propagation direction intersecting the first propagation direction, in the first propagation direction. The diffraction structure region includes a first diffraction structure, and a second diffraction structure on an opposite side of the first diffraction structure from the in-coupling region in the first propagation direction. A grating height of the first diffraction structure is greater than a grating height of the second diffraction structure. A grating width of the first diffraction structure is greater than a grating width of the second diffraction structure.

An image display device according to an aspect of the present disclosure includes the aforementioned optical system and the display element.

## ADVANTAGEOUS EFFECTS OF INVENTION

Aspects of the present disclosure can improve a usage efficiency of an image light ray from a display element.

## BRIEF DESCRIPTION OF DRAWINGS

Fig. 1 is a schematic perspective view of a configuration example of an image display device according to one embodiment.
Fig. 2 is a plan view of a light guide of the image display device of Fig. 1.
Fig. 3 is a partial sectional view of the light guide of the image display device of Fig. 1.
Fig. 4 is a graph of a diffraction efficiency property of a first diffraction structure of a reproduction region of Fig. 3.
Fig. 5 is a graph of a diffraction efficiency property of a second diffraction structure of the reproduction region of Fig. 3.

Fig. 6 is a graph of a diffraction efficiency property of a third diffraction structure of the reproduction region of Fig. 3.

Fig. 7 is an explanatory view of one example of propagation of image light rays conducted by the light guide of the image display device of Fig. 1.

Fig. 8 is a partial sectional view of a light guide according to variation 1.

Fig. 9 is a partial explanatory view of a light guide according to variation 2.

Fig. 10 is a partial sectional view of a light guide according to variation 3.

Fig. 11 is a partial sectional view of a light guide according to variation 4.

Fig. 12 is a plan view of a light guide according to variation 5.

## DESCRIPTION OF EMBODIMENTS

Hereinafter, embodiments will be described in detail with reference to appropriate drawings. Note that, description more detailed than necessary will be omitted. For example, detailed description of well-known matters or duplicate description of substantially the same components may be omitted. This aims to avoid the following description from becoming more redundant than necessary and to facilitate understanding of persons skilled in the art. The inventor(s) provides the following description and attached drawings for making persons skilled in the art understand the present disclosure only and has no intention to limit subject matters claimed in claims.

A positional relationship such as an upward, downward, left, or right direction is assumed to be based on a positional relationship illustrated in Figures, unless otherwise noted. Figures referred to in the following embodiments are schematic figures. There is no guarantee that size or thickness ratios of individual components in each Figure always reflect actual dimensional ratios thereof. The dimensional ratios of the individual components are not limited to those illustrated in Figures.

In the present disclosure, expressions "travel in _ direction" and "propagate in _ direction" used in relation to light rays mean that a light ray forming an image travels in the _ direction as a whole and therefore light beams included in the light ray forming the image may be permitted to be inclined relative to the _ direction. For example, regarding a "light ray traveling in _ direction", it is sufficient that a main light beam of this light is directed in the _ direction, and auxiliary beams of this light may be inclined relative to the _ direction.

## [1. EMBODIMENTS]

## [1.1 CONFIGURATION]

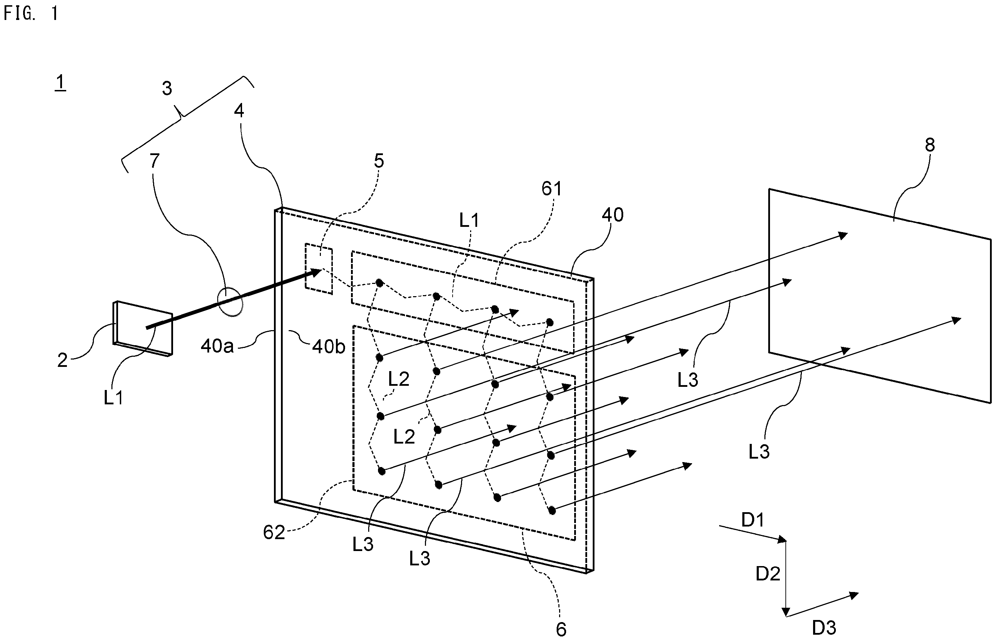

Fig. 1 is a schematic view of a configuration example of an image display device 1. The image display device 1 is, for example, a head mounted display (HMD) which is mounted on a user's head and displays an image (picture). As shown in Fig. 1, the image display device 1 includes a display element 2 and an optical system 3.

The display element 2 is configured to, in order to display an image (picture), output an image light ray L1 for forming an image. Herein, only for simplifying Fig. 1, the image light ray L1 is depicted as light with directivity. However, actually, the image light ray L1 is incident on the optical system 3 as light having an angle corresponding to a field of view. The optical axis of the display element 2 is an optical axis of the image light ray L1, for example. The optical axis of the image light ray L1 is an optical axis of a ray output from a center of the display element 2, for example. Examples of the display element 2 may include known displays such as liquid crystal displays, organic EL displays, scanning MEMS mirrors, MS mirrors, LCOS (Liquid Crystal On Silicon), DMD (Digital Mirror Device), Micro LED, or the like.

The optical system 3 is configured to guide the image light ray L1 output from the display element 2 toward the field of view region 8 set relative to eyes of the user. Within the field of view region 8, the user can watch by his or her own eyes the image formed by the display element 2 with the image not being interrupted. Especially, in the present embodiment, the optical system 3 expands the field of view region 8 by reproducing a pupil of the image light ray L1. In the present embodiment, the field of view region 8 is defined by a rectangular plane.

As shown in Fig. 1, the optical system 3 includes a light guide 4 and a projection optical system 7.

The light guide 4 is configured to guide image light ray L1 which is output from the display element 2 and forms the image, toward the field of view region 8 of the user, as a virtual image.

As shown in Fig. 1, the light guide 4 includes a body 40, an in-coupling region 5, and a reproduction region 6.

The body 40 is made of material transparent in a visible light region. The body 40 has a plate shape. In the present embodiment, the body 40 has a rectangular plate shape. The body 40 includes a first surface 40a and a second surface 40b in a thickness direction of the body 40. As shown in Fig. 1, the body 40 is positioned or arranged to direct the first surface 40a toward the display element 2 and the second surface 40b toward the field of view region 8.

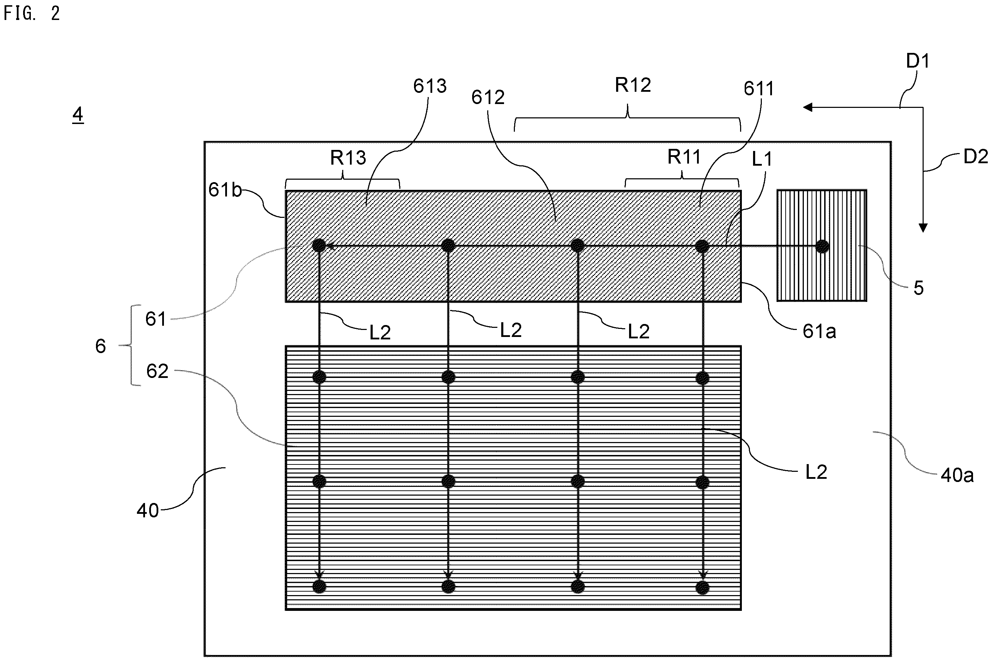

Fig. 2 is a plan view of the light guide 4 when viewed from the display element 2. As shown in Fig. 2, the in-coupling region 5 and the reproduction region 6 are formed at the first surface 40a of the body 40 of the light guide 4.

The in-coupling region 5 is configured to allow the image light ray L1 to enter the body 40 so that the image light ray L1 propagates inside the body 40. In the present embodiment, the in-coupling region 5 allows the image light ray L1 to enter the body 40 so that the image light ray L1 propagates inside the body 40 in a first direction (a left direction in Fig. 2) perpendicular to the thickness direction of the body 40. In the present embodiment, the in-coupling region 5 is used for coupling between the display element 2 and the light guide 4. The in-coupling region 5 allows the image light ray L1 to be incident on the light guide 4 and propagate within the body 40 under a total reflection condition. The term "coupling" used herein means allowing propagation inside the body 40 of the light guide 4 under a total reflection condition.

The in-coupling region 5 is constituted by a diffraction structure causing diffraction effect for the image light ray L1. The diffraction structure of the in-coupling region 5 is a transmission surface-relief diffraction grating, for example, and includes recessed or protruded parts arranged periodically. The diffraction structure of the in-coupling region 5 may include a plurality of recessed or protruded parts which extend in a second direction D2 (a downward direction in Fig. 2) perpendicular to the thickness direction of the body 40 and intersecting the first direction D1 and are arranged at a predetermined interval in the first direction D1, for example. In the present disclosure, the "diffraction structure" also may be a "periodic structure" where a plurality of recessed or protruded parts are arranged periodically. In some cases, depending on manufacture constraints or other situations, the "diffraction structure" may mean incomplete periodic structures in addition to the "periodic structure". In the present embodiment, the second direction D2 is also perpendicular to the first direction D1. The in-coupling region 5 uses diffraction to allow the image light ray L1 to be incident on the body 40 to meet a condition where it is totally reflected by the first surface 40a and the second surface 40b. The in-coupling region 5 allows the image light ray L1 to travel in the first direction D1 within the body 40 while being totally reflected by the first surface 40a and the second surface 40b.

A size of the in-coupling region 5 is set to allow part of a whole of the image light ray L1 from the display element 2 through the projection optical system 7 to be incident on the in-coupling region 5. In the present embodiment, as shown in Fig. 2, the in-coupling region 5 has a quadrilateral shape.

The reproduction region 6 reproduces a pupil of the image light ray L1 to expand the pupil by dividing the image light ray L1 entering the body 40 of the light guide 4 from the in-coupling region 5. In the present embodiment, the reproduction region 6 reproduces the pupil of the image light ray L1 to expand the pupil by: dividing the image light ray L1 entering the body 40 of the light guide 4 from the in-coupling region 5 into a plurality of image light rays L3 traveling in a third direction D3 to be allowed to emerge toward the field of view region 8. The third direction D3 is a direction from the light guide 4 toward the field of view region 8. In the present embodiment, the third direction D3 is perpendicular to the first direction D1 and the second direction D2, respectively. In the present embodiment, the plurality of image light rays L3 are parallel to each other. The expression "the plurality of image light rays L3 are parallel to each other" is not limited to meaning that the plurality of image light rays L3 are parallel to each other in strict sense but may include meaning where the plurality of image light rays L3 are parallel to each other approximately. The plurality of image light rays L3 may not be parallel to each other in strict sense, but it is sufficient that directions of the plurality of image light rays L3 coincide so that the plurality of image light rays L3 are considered to be parallel to each other in view of optical design. When the plurality of image light rays L3 are parallel to each other, it is possible to improve uniformity of arrangement of pupils of the image light ray in the field of view region 8. This can reduce an area of the field of view region 8 where no pupil of the image light ray is located.

The reproduction region 6 of Fig. 2 includes a first diffraction structure region 61 and a second diffraction structure region 62.

The first diffraction structure region 61 is positioned to be arranged side by side with the in-coupling region 5 in the first direction D1. The first diffraction structure region 61 is a surface-relief diffraction grating and includes recessed or protruded parts arranged periodically. The first diffraction structure region 61 is a reflection diffraction grating. The first diffraction structure region 61 is configured to divide the image light ray L1 propagating in a first propagation direction intersecting the thickness direction of the body 40 into, a plurality of image light rays L2 propagating in a second propagation direction intersecting the first propagation direction, in the first propagation direction. In the first diffraction structure region 61, the first direction D1 is the first propagation direction and the second direction D2 is the second propagation direction. The first diffraction structure region 61 allows the plurality of image light rays L2 arranged in the first direction D1 to travel toward the second diffraction structure region 62, by dividing the image light ray L1 propagating inside the body 40 of the light guide 4. By doing so, the first diffraction structure region 61 realizes pupil expansion of the image light ray L1 in the first direction D1. In summary, as shown in Fig. 2, the first diffraction structure region 61 reproduces in the first direction D1, the pupil of the image light ray L1 projected by the projection optical system 7 to expand the pupil by dividing the image light ray L1 into the plurality of image light rays L2 which are parallel to each other and travel toward the second diffraction structure region 62.

A size of the first diffraction structure region 61 is set to allow a whole of the image light ray L1 from the in-coupling region 5 to enter the first diffraction structure region 61. In the present embodiment, as shown in Fig. 2, the first diffraction structure region 61 has a quadrilateral shape.

The first diffraction structure region 61 of Fig. 2 includes a first diffraction structure 611, a second diffraction structure 612, and a third diffraction structure 613.

The second diffraction structure 612 is on an opposite side of the first diffraction structure 611 from the in-coupling region 5 in the first direction D1. The third diffraction structure 613 is on an opposite side of the second diffraction structure 612 from the first diffraction structure 611 in the first direction D1. In other words, the first diffraction structure 611, the second diffraction structure 612, and the third diffraction structure 613 are arranged in this order in the first direction D1.

As shown in Fig. 2, the first diffraction structure region 61 includes a first end 61a on a side of the in-coupling region 5 in the first direction D1, and a second end 61b on an opposite side from the in-coupling region 5 in the first direction D1. The first diffraction structure 611 is at least in a region R11 occupying a quarter of the first diffraction structure region 61 from the first end 61a of the first diffraction structure region 61 in the first direction D1. The second diffraction structure 612 is at least in a region R12 occupying a half of the first diffraction structure region 61 from the first end 61a of the first diffraction structure region 61 in the first direction D1. The third diffraction structure 613 is at least on an opposite side of the second diffraction structure 612 from the first diffraction structure 611 in the first direction D1 and in a region R13 occupying a quarter of the first diffraction structure region 61 from the second end 61b of the first diffraction structure region 61 in the first direction D1. In one example, in the first diffraction structure region 61, the region R11 may be occupied by the first diffraction structure 611, the region R13 may be occupied by the third diffraction structure 613, and a region between the region R11 and the region R13 may be occupied by the second diffraction structure 612.

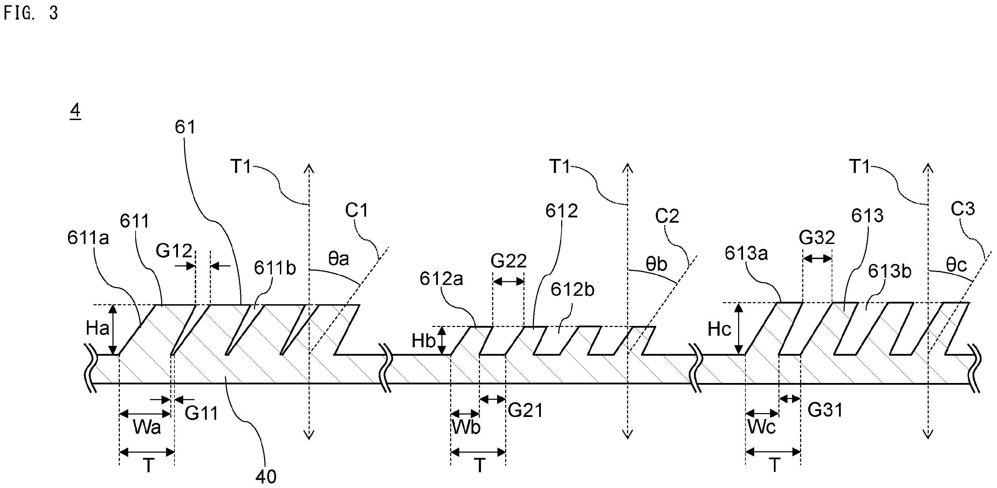

Fig. 3 is a partial sectional view of the light guide 4 of the image display device 1. In detail, Fig. 3 is a section of part including the first diffraction structure region 61, of the light guide 4, at a plane including the periodic direction of the first diffraction structure region 61 and the thickness direction of the body 40.

As shown in Fig. 3, the first diffraction structure region 61 is constituted by plurality of recessed or protruded parts in relation to the thickness direction of the body 40 which are arranged to have periodicity in a periodic direction. The plurality of recessed or protruded parts include recessed or protruded parts 611a of the first diffraction structure 611, recessed or protruded parts 612a of the second diffraction structure 612, and recessed or protruded parts 613a of the third diffraction structure 613. In Fig. 3, recessed or protruded parts 611a, 612a, 613a are protruded parts protruding from the body 40. The periodic direction is a direction where the recessed or protruded parts are arranged to have periodicity. The periodic direction includes a component of the first propagation direction (for the first diffraction structure region 61, the first direction D1). To convert the image light ray L1 propagating in the first direction D1 into the image light rays L2 propagating in the second direction D2, the periodic direction is set to be a direction inclined relative to the first direction D1. The periodic direction is a direction of a wave vector of the first diffraction structure region 61. As one example, the periodic direction of the first diffraction structure region 61 is a direction inclined at 45 degrees relative to the first direction D1 within a plane perpendicular to the thickness direction of the body 40. In this case, the recessed or protruded parts 611a, 612a, 613a extend in a direction inclined at 45 degrees relative to the first direction D1 within a plane perpendicular to the thickness direction of the body 40. This allows conversion of the image light ray L1 propagating in the first direction D1 into the image light rays L2 propagating in the second direction D2. The periodic direction is not limited to a direction inclined at 45 degrees relative to the first direction D1 within the plane perpendicular to the thickness direction of the body 40. For example, an angle of the periodic direction relative to the first direction D1 within the plane perpendicular to the thickness direction of the body 40 may be in a range of 20 degrees to 70 degrees.

In the first diffraction structure region 61, the grating period is constant. In summary, the first diffraction structure 611, the second diffraction structure 612, and the third diffraction structure 613 have the same grating period. The grating period is a distance between the same positions in adjacent two recessed or protruded parts in the periodic direction. The grating period of the first diffraction structure 611 is a distance between the same positions in the adjacent two recessed or protruded parts 611a in the periodic direction. The grating period of the second diffraction structure 612 is a distance between the same positions in the adjacent two recessed or protruded parts 612a in the periodic direction. The grating period of the third diffraction structure 613 is a distance between the same positions in the adjacent two recessed or protruded parts 613a in the periodic direction. Examples of the distance between the same positions in the adjacent recessed or protruded parts in the periodic direction include a distance between front ends of the adjacent recessed or protruded parts in the periodic direction, a distance between centers of the adjacent recessed or protruded parts in the periodic direction, and a distance between rear ends of the adjacent recessed or protruded parts in the periodic direction.

As described above, the first diffraction structure 611, the second diffraction structure 612, and the third diffraction structure 613 have the same grating period but are different in at least one of a grating height and a grating width to have different diffraction efficiency properties. The grating height is a height of the recessed or protruded part (the recessed or protruded parts 611a, 612a, 613a). The grating width is a width of the recessed or protruded part (the recessed or protruded parts 611a, 612a, 613a). The width of the recessed or protruded part is a width at a base end side (a side of the body 40, a lower end side in Fig. 3) of the recessed or protruded part rather than a width at a top end side (an upper end side in Fig. 3) of the recessed or protruded part.

Hereinafter, explanation is made to the grating heights and the grating widths of the first diffraction structure 611, the second diffraction structure 612, and the third diffraction structure 613 in the present embodiment, with reference to Fig. 3.

As shown in Fig. 3, when the grating height (the height of the recessed or protruded part 611a) of the first diffraction structure region 61 is denoted by Ha, and the grating height (the height of the recessed or protruded part 612a) of the second diffraction structure region 62 is denoted by Hb, the grating height Ha and the grating height Hb satisfy a relation of Ha > Hb. In summary, the grating height Ha of the first diffraction structure 611 is greater than the grating height Hb of the second diffraction structure 612. When the grating width (the width of the recessed or protruded part 611a) of the first diffraction structure region 61 is denoted by Wa and the grating width (the width of the recessed or protruded part 612a) of the second diffraction structure 612 is denoted by Wb, the grating width Wa and the grating width Wb satisfy a relation of Wa > Wb. In summary, the grating width Wa of the first diffraction structure 611 is greater than the grating width Wb of the second diffraction structure 612.

To sum up, the first diffraction structure region 61 satisfies the following formulae (1) and (2). This enables improvement of a usage efficiency of the image light ray L1 from the display element 2.

[FORMULA 1]

$$Ha > Hb \qquad (1)$$

[FORMULA 2]

$$Wa > Wb \qquad (2)$$

Further, as shown in Fig. 3, when the grating period of the first diffraction structure region 61 is denoted by T and the grating height (the height of the recessed or protruded part 611a) of the first diffraction structure 611 is denoted by Ha, the grating period T and the grating height Ha may preferably satisfy a relation of 0.3 < Ha/T < 1.2. When the grating width (the width of the recessed or protruded part 611a) of the first diffraction structure 611 is denoted by Wa, the grating period T and the grating width Wa satisfy a relation of 0.7 < Wa/T < 1.0. When the grating height (the height of the recessed or protruded part 612a) of the second diffraction structure 612 is denoted by Hb, the grating height Ha and the grating height Hb satisfy a relation of 1.2 < Ha/Hb < 10.0.

To sum up, the first diffraction structure region 61 satisfies the following formulae (3) to (5).

[FORMULA 3]

$$0.3 < \frac{Ha}{T} < 1.2 \qquad (3)$$

[FORMULA 4]

$$0.7 < \frac{Wa}{T} < 1.0 \qquad (4)$$

[FORMULA 5]

$$1.2 < \frac{Ha}{Hb} < 10.0 \qquad (5)$$

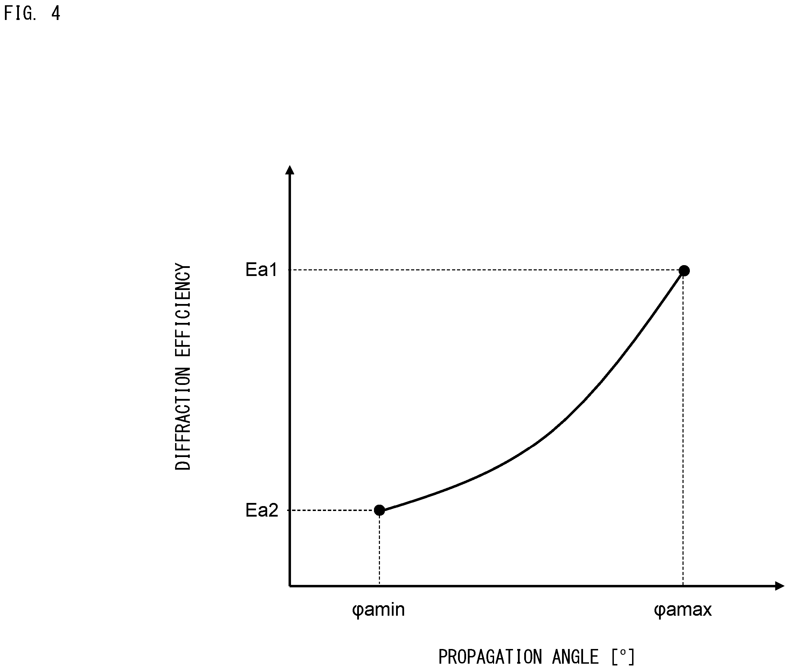

The first diffraction structure region 61 satisfying at least the above formulae (1) and (2) allows the first diffraction structure 611 of the first diffraction structure region 61 to have a diffraction efficiency property shown in Fig. 4. It is preferable that the first diffraction structure region 61 satisfies the above formulae (3) to (5) in addition to the above formulae (1) and (2). Fig. 4 is a graph of the diffraction efficiency property of the first diffraction structure 611 of the first diffraction structure region 61 of the reproduction region 6. In Fig. 4, a horizontal axis represents a propagation angle [°] and a vertical axis represents a diffraction efficiency. The propagation angle is an incident angle of the image light ray L1 propagating in the first direction D1 relative to an interface of the body 40 (the first surface 40a or the second surface 40b). From Fig. 4, the first diffraction structure 611 has the diffraction efficiency property allowing the diffraction efficiency to increase with an increase in the propagation angle. In other words, the first diffraction structure 611 has the diffraction efficiency property allowing the diffraction efficiency to decrease with a decrease in the propagation angle. In Fig. 4, cpamax is a maximum value of the propagation angle and φamin is a minimum value of the propagation angle. Ea1 represents the diffraction efficiency at the propagation angle of φamax, and Ea2 represents the diffraction efficiency at the propagation angle of φamin. Thus, when the diffraction efficiency for a light ray which is the largest in the incident angle (the propagation angle) relative to the interface of the body 40, of light rays propagating in the first direction D1 is denoted by Ea1 and the diffraction efficiency for a light ray which is the smallest in the incident angle (the propagation angle) relative to the interface of the body 40, of light rays propagating in the first direction D1 is denoted by Ea2, the first diffraction structure 611 has the diffraction efficiency property satisfying a relation of Ea1 > Ea2.

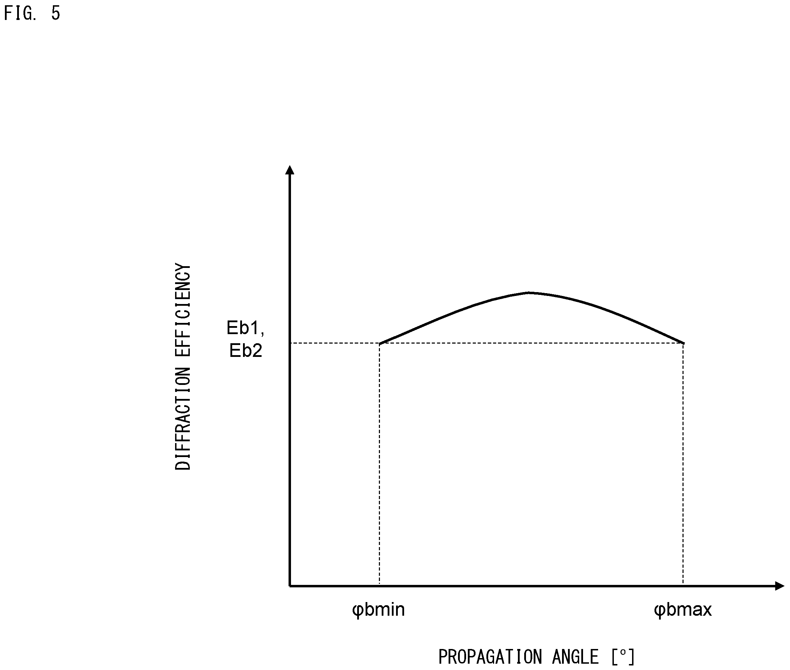

The first diffraction structure region 61 satisfying at least the above formulae (1) and (2) allows the second diffraction structure 612 of the first diffraction structure region 61 to have a diffraction efficiency property shown in Fig. 5. It is preferable that the first diffraction structure region 61 satisfies the above formulae (3) to (5) in addition to the above formulae (1) and (2). Fig. 5 is a graph of the diffraction efficiency property of the second diffraction structure 612 of the first diffraction structure region 61 of the reproduction region 6. In Fig. 5, a horizontal axis represents the propagation angle [°] and a vertical axis represents the diffraction efficiency. From Fig. 5, the second diffraction structure 612 has the diffraction efficiency property allowing the diffraction efficiency to vary like a convex upward parabolic shape relative to the propagation angle. In Fig. 5, cpbmax is a maximum value of the propagation angle and cpbmin is a minimum value of the propagation angle. Eb1 represents the diffraction efficiency at the propagation angle of φbmax, and Eb2 represents the diffraction efficiency at the propagation angle of cpbmin. Thus, when the diffraction efficiency for a light ray which is the largest in the incident angle (the propagation angle) relative to the interface of the body 40, of light rays propagating in the first direction D1 is denoted by Eb1 and the diffraction efficiency for a light ray which is the smallest in the incident angle (the propagation angle) relative to the interface of the body 40, of light rays propagating in the first direction D1 is denoted by Eb2, the second diffraction structure 612 has the diffraction efficiency property satisfying a relation of Ea1 ≥ Ea2. In particular, in Fig. 5, the diffraction efficiencies Eb1 and Eb2 satisfy a relation of Eb1 = Eb2.

When the grating height of the third diffraction structure 613 is denoted by Hc, the grating heights Ha, Hb, and Hc satisfy a relation of Ha < Hc and a relation of Hb < Hc. When the grating width of the third diffraction structure 613 is denoted by Wc, the grating widths Wa, Wb, and Wc satisfy a relation of Wc < Wa and a relation of Wc < Wb.

To sum up, the first diffraction structure region 61 satisfies the following formulae (6) to (9).
[FORMULA 6]

$$Ha < Hc \qquad (6)$$

[FORMULA 7]

$$Hb < Hc \qquad (7)$$

[FORMULAS]

$$Wc < Wa \qquad (8)$$

[FORMULA 9]

$$Wc < Wb \qquad (9)$$

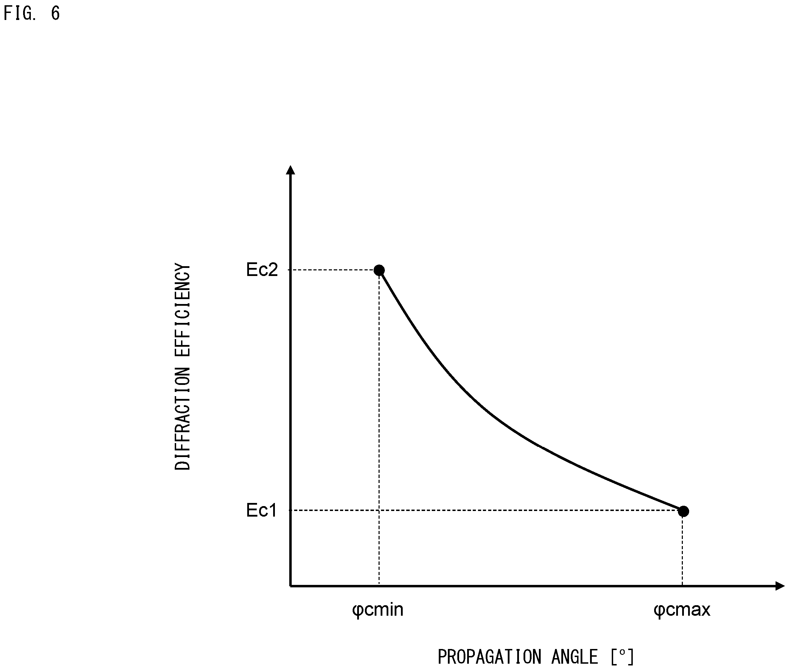

The first diffraction structure region 61 satisfying the above formulae (1) to (9) allows the third diffraction structure 613 of the first diffraction structure region 61 to have a diffraction efficiency property shown in Fig. 6. Fig. 6 is a graph of the diffraction efficiency property of the third diffraction structure 613 of the first diffraction structure region 61 of the reproduction region 6. In Fig. 6, a horizontal axis represents the propagation angle [°] and a vertical axis represents the diffraction efficiency. From Fig. 6, the third diffraction structure 613 has the diffraction efficiency property allowing the diffraction efficiency to decrease with an increase in the propagation angle. In other words, the third diffraction structure 613 has the diffraction efficiency property allowing the diffraction efficiency to increase with a decrease in the propagation angle. In Fig. 6, φcmax is a maximum value of the propagation angle and φcmin is a minimum value of the propagation angle. Ec1 represents the diffraction efficiency at the propagation angle of φcmax, and Ed2 represents the diffraction efficiency at the propagation angle of φcmin. Thus, when the diffraction efficiency for a light ray which is the largest in the incident angle (the propagation angle) relative to the interface of the body 40, of light rays propagating in the first direction D1 is denoted by Ec1 and the diffraction efficiency for a light ray which is the smallest in the incident angle (the propagation angle) relative to the interface of the body 40, of light rays propagating in the first direction D1 is denoted by Ec2, the third diffraction structure 613 has the diffraction efficiency property satisfying a relation of Ec1 < Ec2. In particular, in Fig. 5.

In the present embodiment, as one example, T = 320 nm, Ha = 200 nm, Wa = 300 nm, Hb = 100 nm, Wb = 160 nm, Hc = 250 nm, and Wc = 180 nm. Thus, Ha > Hb and the formula (1) is satisfied. Wa > Wb and the formula (2) is satisfied. Ha/T = 0.625 and the formula (3) is satisfied. Wa/T = 0.9375 and the formula (4) is satisfied. Ha/Hb = 2 and the formula (5) is satisfied. Obviously, the aforementioned mathematical values satisfy the formulae (6) to (9).

In the present embodiment, as shown in Fig. 3, a center axis C1 of the recessed or protruded parts 611a in the first diffraction structure 611 is inclined relative to a thickness direction T1 of the body 40. When the width Wa of the recessed or protruded parts 611a is assumed to be constant, the center axis C1 is an axis passing through a center of the recessed or protruded parts 611a in a plane including the periodic direction of the first diffraction structure region 61 and the thickness direction T1 of the body 40. In the present embodiment, an inclined angle of the center axis C1 of the recessed or protruded parts 611a relative to the thickness direction T1 of the body 40 is equal to an inclined angle of a surface on a side of the in-coupling region 5 (a left surface in Fig. 3), of the recessed or protruded parts 611a.

In the first diffraction structure region 61, the center axis C1 of the recessed or protruded parts 611a is inclined relative to the thickness direction T1 of the body 40 and therefore the diffraction efficiency of light in a predetermined plane perpendicular to the thickness direction T1 of the body 40 can be controlled. For example, adjusting a direction and an angle of inclination of the center axis C1 of the recessed or protruded parts 611a relative to the thickness direction T1 of the body 40 allows a decrease in amount of light propagating in a direction not requiring light diffraction and an increase in amount of light propagating in a direction requiring light diffraction. Thus, it is possible to efficiently guide the image light ray L1 from the display element 2 toward the field of view region 8. Accordingly, the usage efficiency of the image light ray L1 from the display element 2 can be improved.

In the present embodiment, as shown in Fig. 3, a center axis C2 of the recessed or protruded parts 612a in the second diffraction structure 612 is inclined relative to the thickness direction T1 of the body 40. When the width Wb of the recessed or protruded parts 612a is assumed to be constant, the center axis C2 is an axis passing through a center of the recessed or protruded parts 612a in a plane including the periodic direction of the first diffraction structure region 61 and the thickness direction T1 of the body 40. In the present embodiment, an inclined angle of the center axis C2 of the recessed or protruded parts 612a relative to the thickness direction T1 of the body 40 is equal to an inclined angle of a surface on a side of the in-coupling region 5 (a left surface in Fig. 3), of the recessed or protruded parts 612a.

In the first diffraction structure region 61, the center axis C2 of the recessed or protruded parts 612a is inclined relative to the thickness direction T1 of the body 40 and therefore the diffraction efficiency of light in a predetermined plane perpendicular to the thickness direction T1 of the body 40 can be controlled. For example, adjusting a direction and an angle of inclination of the center axis C2 of the recessed or protruded parts 612a relative to the thickness direction T1 of the body 40 allows a decrease in amount of light propagating in a direction not requiring light diffraction and an increase in amount of light propagating in a direction requiring light diffraction. Thus, it is possible to efficiently guide the image light ray L1 from the display element 2 toward the field of view region 8. Accordingly, the usage efficiency of the image light ray L1 from the display element 2 can be improved.

In consideration of the diffraction efficiency property of each of the first diffraction structure 611 and the second diffraction structure 612, it is preferable that the inclined angle of the center axis C1 of the recessed or protruded parts 611a in the first diffraction structure 611 relative to the thickness direction T1 of the body 40 and the inclined angle of the center axis C2 of the recessed or protruded parts 612a in the second diffraction structure 612 relative to the thickness direction T1 of the body 40 satisfy the following relation. When the inclined angle of the center axis C1 of the recessed or protruded parts 611a in the first diffraction structure 611 relative to the thickness direction T1 of the body 40 is denoted by $\theta a$ and the inclined angle of the center axis C2 of the recessed or protruded parts 612a in the second diffraction structure 612 relative to the thickness direction T1 of the body 40 is denoted by $\theta b$, the inclined angles $\theta a$ and $\theta b$ satisfy a relation of $0.9 < \theta a/\theta b < 1.1$. As one example, $\theta a$ is set to be larger than 20 degrees and smaller than 65 degrees.

In the present embodiment, as shown in Fig. 3, a center axis C3 of the recessed or protruded parts 613a in the third diffraction structure 613 is inclined relative to a thickness direction T1 of the body 40. When the width Wc of the recessed or protruded parts 613a is assumed to be constant, the center axis C3 is an axis passing through a center of the recessed or protruded parts 613a in a plane including the periodic direction of the first diffraction structure region 61 and the thickness direction of the body 40. In the present embodiment, an inclined angle of the center axis C3 of the recessed or protruded parts 613a relative to the thickness direction T1 of the body 40 is equal to an inclined angle of a surface on a side of the in-coupling region 5 (a left surface in Fig. 3), of the recessed or protruded parts 613a.

In the first diffraction structure region 61, the center axis C3 of the recessed or protruded parts 613a is inclined relative to the thickness direction T1 of the body 40 and therefore the diffraction efficiency of light in a predetermined plane perpendicular to the thickness direction T1 of the body 40 can be controlled. For example, adjusting a direction and an angle of inclination of the center axis C3 of the recessed or protruded parts 613a relative to the thickness direction T1 of the body 40 allows a decrease in amount of light propagating in a direction not requiring light diffraction and an increase in amount of light propagating in a direction requiring light diffraction. Thus, it is possible to efficiently guide the image light ray L1 from the display element 2 toward the field of view region 8. Accordingly, the usage efficiency of the image light ray L1 from the display element 2 can be improved.

In consideration of the diffraction efficiency property of each of the first diffraction structure 611 and the third diffraction structure 613, it is preferable that the inclined angle of the center axis C1 of the recessed or protruded parts 611a in the first diffraction structure 611 relative to the thickness direction T1 of the body 40 and the inclined angle of the center axis C3 of the recessed or protruded parts 613a in the third diffraction structure 613 relative to the thickness direction T1 of the body 40 satisfy the following relation. When the inclined angle of the center axis C1 of the recessed or protruded parts 611a in the first diffraction structure 611 relative to the thickness direction T1 of the body 40 is denoted by $\theta a$ and the inclined angle of the center axis C3 of the recessed or protruded parts 613a in the third diffraction structure 613 relative to the thickness direction T1 of the body 40 is denoted by $\theta c$, the inclined angles $\theta a$ and $\theta c$ satisfy a relation of $0.9 < \theta a/\theta c < 1.1$.

In the present embodiment, as shown in Fig. 3, the recessed or protruded parts 611a in the first diffraction structure 611 have shapes allowing distances between the recessed or protruded parts 611a in the periodic direction to become greater toward the outside of the body 40 than at the inside of the body 40 in the thickness direction T1 of the body 40. The recessed or protruded parts 611a have so-called wedge shapes. In other words, a space 611b between the recessed or protruded parts 611a becomes larger in a dimension in the periodic direction of the first diffraction structure region 61 as moving from the inside to the outside of the body 40 in the thickness direction T1 of the body 40. Therefore, distances G11 between the recessed or protruded parts 611a at the base end sides (lower end sides in Fig. 3) of the recessed or protruded parts 611a are shorter than distances G12 between the recessed or protruded parts 611a at the top end sides (upper end sides in Fig. 3) of the recessed or protruded parts 611a.

In the present embodiment, as shown in Fig. 3, the recessed or protruded parts 612a in the second diffraction structure 612 have shapes allowing distances between the recessed or protruded parts 612a in the periodic direction to become greater toward the outside of the body 40 than at the inside of the body 40 in the thickness direction T1 of the body 40. The recessed or protruded parts 612a have so-called wedge shapes. In other words, a space 612b between the recessed or protruded parts 612a becomes larger in a dimension in the periodic direction of the first diffraction structure region 61 as moving from the inside to the outside of the body 40 in the thickness direction T1 of the body 40. Therefore, distances G21 between the recessed or protruded parts 612a at the base end sides (lower end sides in Fig. 3) of the recessed or protruded parts 612a are shorter than distances G22 between the recessed or protruded parts 612a at the top end sides (upper end sides in Fig. 3) of the recessed or protruded parts 612a.

In the present embodiment, as shown in Fig. 3, the recessed or protruded parts 613a in the third diffraction structure 613 have shapes allowing distances between the recessed or protruded parts 613a in the periodic direction to become greater toward the outside of the body 40 than at the inside of the body 40 in the thickness direction T1 of the body 40. The recessed or protruded parts 613a have so-called wedge shapes. In other words, a space 613b between the recessed or protruded parts 613a becomes larger in a dimension in the periodic direction of the first diffraction structure region 61 as moving from the inside to the outside of the body 40 in the thickness direction T1 of the body 40. Therefore, distances G31 between the recessed or protruded parts 613a at the base end sides (lower end sides in Fig. 3) of the recessed or protruded parts 613a are shorter than distances G32 between the recessed or protruded parts 613a at the top end sides (upper end sides in Fig. 3) of the recessed or protruded parts 613a.

The second diffraction structure region 62 is located to be arranged side by side with the first diffraction structure region 61 in the second direction D2. The second diffraction structure region 62 is a surface-relief diffraction grating and includes recessed or protruded parts arranged periodically. The second diffraction structure region 62 is a transmission diffraction grating. The second diffraction structure region 62 is configured to divide the image light ray L2 propagating in a first propagation direction intersecting the thickness direction of the body 40 into, a plurality of image light rays L3 propagating in a second propagation direction intersecting the first propagation direction, in the first propagation direction. In the second diffraction structure region 62, the second direction D2 is the first propagation direction and the third direction D3 (a direction of the light ray L3 in Fig. 1) is the second propagation direction. The second diffraction structure region 62 allows the plurality of image light rays L3 arranged in the second direction D2 to travel toward the field of view region 8, by dividing the image light ray L2 propagating inside the body 40 of the light guide 4. By doing so, the second diffraction structure region 62 realizes pupil expansion of the image light ray L1 in the second direction D2. In summary, as shown in Fig. 1, the second diffraction structure region 62 reproduces in the second direction D2, the pupil of the image light ray L1 projected by the projection optical system 7 to expand the pupil by dividing the image light ray L2 into the plurality of image light rays L3 which are parallel to each other and travel toward the field of view region 8. The second diffraction structure region 62 functions as an exit structure allowing the image light ray L1 entering the body 40 via the in-coupling region 5 to emerge from the body 40 toward the field of view region 8.

A size of the second diffraction structure region 62 is set to allow a whole of the light ray L2 from the first diffraction structure region 61 to enter the second diffraction structure region 62. In the present embodiment, as shown in Fig. 2, the second diffraction structure region 62 has a quadrilateral shape. The second diffraction structure region 62 may include a plurality of recessed or protruded parts extending in the first direction D1 and arranged at a predetermined interval in the second direction D2, for example.

The projection optical system 7 projects the image light ray L1 which is output from the display element 2 and forms the image. Thus, the projection optical system 7 allows the image light ray L1 from the display element 2 to be incident on the light guide 4. As shown in Fig. 1, the projection optical system 7 is positioned between the display element 2 and the in-coupling region 5 of the light guide 4. The projection optical system 7 collimates the image light ray L1 from the display element 2 and allows it to be incident on the in-coupling region 5, for example. The projection optical system 7 allows the image light ray L1 to be incident on the in-coupling region 5 as a substantial collimated light ray. The projection optical system 7 is a biconvex lens, for example.

[1.2 ACTIONS]

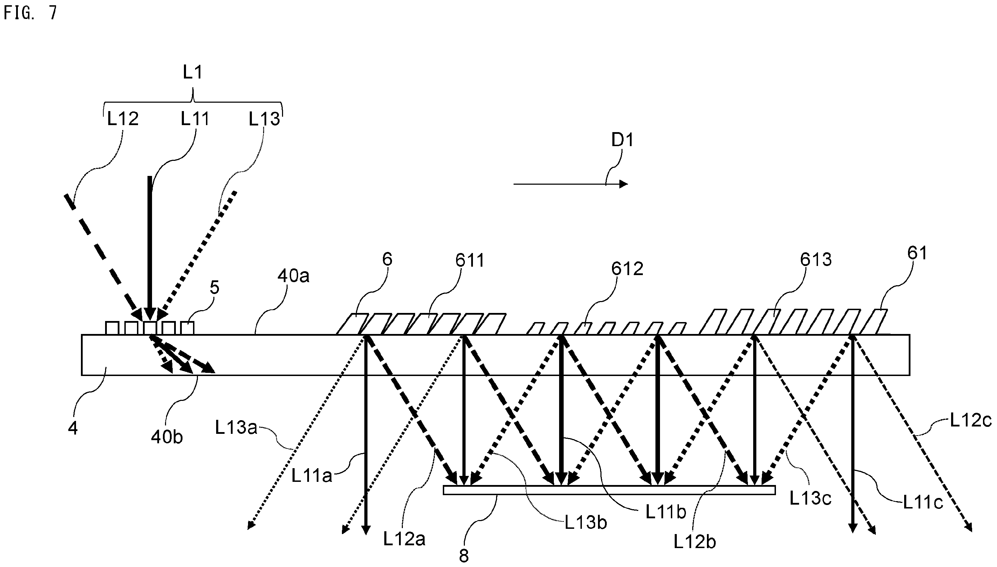

Next, an action of the light guide 4, in particular, the reproduction region 6, of the image display device 1 according to the present embodiment will be described. Fig. 7 is an explanatory view of one example of light propagation by the light guide 4 of the image display device 1 ① the light guide 4.

The image light ray L1 from the display element 2 is incident on the in-coupling region 5 of the light guide 4 and the in-coupling region 5 allows the image light ray L1 to travel toward the reproduction region 6. As shown in Fig. 7, the image light ray L1 includes a main light beam L11 corresponding to a center of the virtual image, and a plurality of auxiliary light beams L12 and L13 which come closer to the main light beam L11 as traveling from the projection optical system 7 toward the in-coupling region 5. In Fig. 7, to distinguish the main light beam L11, the auxiliary light beam L12 and the auxiliary light beam L13 from each other, the main light beam L11 is represented by a solid arrow, the auxiliary light beam L12 is represented by a dotted arrow, and the auxiliary light beam L13 is represented by a dashed arrow. In Fig. 7, the auxiliary light beam L12 corresponds to a light beam which is the greatest in the incident angle relative to the interface of the body 40 (the propagation angle), in the image light ray L1. In Fig. 7, the auxiliary light beam L13 corresponds to a light beam which is the smallest in the incident angle relative to the interface of the body 40 (the propagation angle), in the image light ray L1.

The main light beam L11 and the auxiliary light beams L12 and L13 of the image light ray L1 travel inside the body 40 of the light guide 4 toward the first direction D1 by being totally reflected by the first surface 40a and the second surface 40b, and reach the first diffraction structure region 61 of the reproduction region 6. In the first diffraction structure region 61, the first diffraction structure 611, the second diffraction structure 612 and the third diffraction structure 613 are arranged in this order in the first direction D1.

The main light beam L11 and the auxiliary light beams L12 and L13 first arrive at the first diffraction structure 611. Part of the main light beam L11 and the auxiliary light beams L12 and L13 are directed toward the second diffraction structure region 62 by the first diffraction structure 611 and extracted as exit light rays L11a, L12a, and L13a via the second diffraction structure region 62. Remaining part of the main light beam L1 1 and the auxiliary light beams L12 and L13 which is not diffracted at the first diffraction structure 611 arrive at the second diffraction structure 612. Part of the main light beam L11 and the auxiliary light beams L12 and L13 are directed toward the second diffraction structure region 62 by the second diffraction structure 612 and extracted as the exit light rays L11b, L12b, and L13b via the second diffraction structure region 62. Remaining part of the main light beam L11 and the auxiliary light beams L12 and L13 which is not diffracted at the second diffraction structure 612 arrive at the third diffraction structure 613. Part of the main light beam L11 and the auxiliary light beams L12 and L13 are directed toward the second diffraction structure region 62 by the third diffraction structure 613 and extracted as the exit light rays L11c, L12c, and L13c via the second diffraction structure region 62.

In Fig. 7, light amounts of the exit light rays L11a to L11c, L12a to L12c, and L13a to L13c are schematically indicated by thicknesses of corresponding arrows.

In Fig. 7, an exit light ray 13a does not arrive at the field of view region 8 and therefore may become a waste. In the present embodiment, as shown in Fig. 4, the first diffraction structure 611 has the diffraction efficiency property satisfying the relation of Ea1 > Ea2. Therefore, of the main light beam L11 and the auxiliary light beams L12 and L13, the auxiliary light beam L13 is less diffracted than the auxiliary light beam L12. In other words, the auxiliary light beam L13 is less directed toward the second diffraction structure region 62 than the auxiliary light beam L12, and accordingly is less extracted from the body 40 to the outside via the second diffraction structure region 62. Thus, the first diffraction structure 611 can reduce amount of the exit light ray Ll3a which does not arrive at the field of view region 8 in the first direction D1. Therefore, it is possible to improve the usage efficiency of the image light ray L1 from the display element 2. While, the auxiliary light beam L12 is more directed toward the second diffraction structure region 62 than the auxiliary light beam L13, and accordingly is more extracted from the body 40 to the outside via the second diffraction structure region 62. Thus, the first diffraction structure 611 can increase amount of the exit light ray L12a which arrives at the field of view region 8 in the first direction D1. Therefore, it is possible to improve the usage efficiency of the image light ray L1 from the display element 2. Additionally, this can reduce an amount of part of the auxiliary light beam L12 which is not diffracted by the first diffraction structure region 61 and passes therethrough.

In Fig. 7, the exit light rays L11b, L12b, and L13b arrive at the field of view region 8 and therefore may not become a waste. In the present embodiment, as shown in Fig. 5, the second diffraction structure 612 has the diffraction efficiency property satisfying the relation of Eb1 = Eb2. Therefore, the second diffraction structure 612 can reduce variations of light amounts of the exit light rays L11, L12, and Ll3b in the first direction D1. Further, the amount of the auxiliary light beam L13 extracted from the body 40 is limited by the first diffraction structure 611. However, the second diffraction structure 612 can compensate for decreased amount by the limitation in the first diffraction structure 611. Therefore, it is possible to reduce an amount of part of the auxiliary light beam L13 which is not diffracted by the first diffraction structure region 61 and passes therethrough. Further, it is possible to reduce an amount of part of the auxiliary light beam L12 which is not diffracted by the first diffraction structure region 61 and passes therethrough.

In the present embodiment, as shown in Fig. 6, the third diffraction structure 613 has the diffraction efficiency property satisfying the relation of Ec1 < Ec2. Therefore, of the main light beam L11 and the auxiliary light beams L12 and L13, the auxiliary light beam L13 is more diffracted than the auxiliary light beam L12. In other words, the auxiliary light beam L13 is more directed toward the second diffraction structure region 62 than the auxiliary light beam L12, and accordingly is more extracted from the body 40 to the outside via the second diffraction structure region 62. The amount of the auxiliary light beam L13 extracted from the body 40 is limited by the first diffraction structure 611. However, the third diffraction structure 613 also can compensate for decreased amount by the limitation in the first diffraction structure 611. Therefore, it is possible to reduce an amount of part of the auxiliary light beam L13 which passes through the first diffraction structure region 61. Thus, it is possible to increase an amount of the exit light ray Ll3c which arrives at the field of view region 8 in the first direction D1. Therefore, it is possible to improve the usage efficiency of the image light ray L1 from the display element 2. In the third diffraction structure 613, the auxiliary light beam L12 is less diffracted than the auxiliary light beam L13 but, before arriving at the third diffraction structure 613, the auxiliary light beam L13 has already been diffracted by the first diffraction structure 611 and the second diffraction structure 612. Therefore, there is relatively low influence.

[1.3 ADVANTAGEOUS EFFECTS]

The aforementioned optical system 3 includes a light guide 4 for guiding an image light ray L1 which is output from a display element 2 and forms an image, to a field of view region 8 of a user as a virtual image. The light guide 4 includes: a body 40 having a plate shape; an in-coupling region 5 formed at the body 40 and allowing the image light ray L1 to enter the body 40 so that the image light ray L1 propagates inside the body 40; and a reproduction region 6 formed at the body 40 and including a diffraction structure region 61 which constitutes a surface-relief diffraction grating dividing an image light ray L1 propagating in a first propagation direction (first direction D1) intersecting a thickness direction T1 of the body 40 into a plurality of image light rays L2 propagating in a second propagation direction (second direction D2) intersecting the first propagation direction, in the first propagation direction. The diffraction structure region 61 includes a first diffraction structure 611, and a second diffraction structure 612 on an opposite side of the first diffraction structure 611 from the in-coupling region 5 in the first propagation direction D1. A grating height of the first diffraction structure 611 is greater than a grating height of the second diffraction structure 612. A grating width of the first diffraction structure 611 is greater than a grating width of the second diffraction structure 612. This configuration can improve the usage efficiency of the image light ray L1 from the display element 2.

In the optical system 3, the diffraction structure region 61 satisfies relations of 0.3 < Ha/T < 1.2, 0.7 < Wa/T < 1.0, and 1.2 < Ha/Hb < 10.0. T denotes a grating period of the diffraction structure region 61). Ha denotes the grating height of the first diffraction structure 611. Wa denotes the grating width of the first diffraction structure 611. Hb denotes the grating height of the second diffraction structure 612. This configuration can improve the usage efficiency of the image light ray L1 from the display element 2.

In the optical system 3, the first diffraction structure 611 has a diffraction efficiency property which allows a diffraction efficiency for a light ray (the auxiliary light beam L12) which is the largest in an incident angle relative to an interface of the body 40, of light rays (the image light ray L1) propagating in the first propagation direction to be greater than a diffraction efficiency for a light ray (the auxiliary light beam L13) which is the smallest in the incident angle relative to the interface of the body 40, of light rays (the image light ray L1) propagating in the first propagation direction. This configuration can further improve the usage efficiency of the image light ray L1 from the display element 2.

In the optical system 3, the second diffraction structure 612 has a diffraction efficiency property which allows a diffraction efficiency for a light ray (the auxiliary light beam L12) which is the largest in the incident angle relative to the interface of the body 40, of light rays (the image light ray L1) propagating in the first propagation direction to be equal to or greater than a diffraction efficiency for a light ray (the auxiliary light beam L13) which is the smallest in the incident angle relative to the interface of the body 40, of light rays (the image light ray L1) propagating in the first propagation direction. This configuration can further improve the usage efficiency of the image light ray L1 from the display element 2.

In the optical system 3, the diffraction structure region 61 further includes a third diffraction structure 613. The third diffraction structure 613 is on an opposite side of the second diffraction structure 612 from the first diffraction structure 611 in the first propagation direction. The diffraction structure region 61 satisfies at least one of a relation of Ha < Hc or a relation of Hb < Hc. Hc denotes a grating height of the third diffraction structure 613. This configuration can further improve the usage efficiency of the image light ray L1 from the display element 2.

In the optical system 3, the first diffraction structure region 61 satisfies a relation of Wc < Wa and a relation of Wc < Wb both. Wc denotes a grating width of the third diffraction structure 613. This configuration can further improve the usage efficiency of the image light ray L1 from the display element 2.

In the optical system 3, the third diffraction structure 613 has a diffraction efficiency property which allows a diffraction efficiency for a light ray (the auxiliary light beam L12) which is the largest in the incident angle relative to the interface of the body 40, of light rays (the image light ray L1) propagating in the first propagation direction to be smaller than a diffraction efficiency for a light ray (the auxiliary light beam L13) which is the smallest in the incident angle relative to the interface of the body 40, of light rays (the image light ray L1) propagating in the first propagation direction. This configuration can further improve the usage efficiency of the image light ray L1 from the display element 2.

In the optical system 3, the diffraction structure region 61 is constituted by recessed or protruded parts 611a, 612a, 613a in relation to the thickness direction T1 of the body 40 which are arranged to have a periodicity in a periodic direction including a component of the first propagation direction. Central axes C1 of the recessed or protruded parts 611a in the first diffraction structure 611

are inclined relative to the thickness direction T1 of the body 40. This configuration can further improve the usage efficiency of the image light ray L1 from the display element 2.

In the optical system 3, the recessed or protruded parts 611a in the first diffraction structure 611 have shapes allowing distances between the recessed or protruded parts 611a in the periodic direction to become greater toward the outside of the body 40 than at the inside of the body 40 in the thickness direction T1 of the body 40. This configuration enables facilitation of manufacture of the light guide 4.

In the optical system 3, central axes C2 of the recessed or protruded parts 612a in the second diffraction structure 612 are inclined relative to the thickness direction T1 of the body 40. This configuration can further improve the usage efficiency of the image light ray L1 from the display element 2.

In the optical system 3, when inclined angles of the central axes C1 of the recessed or protruded parts 611a in the first diffraction structure 611 relative to the thickness direction T1 of the body 40 are denoted by $\theta a$ and inclined angles of the central axes C2 of the recessed or protruded parts 612a in the second diffraction structure 612 relative to the thickness direction T1 of the body 40 are denoted by $\theta b$, a relation of $0.9 < \theta a/\theta b < 1.1$ is satisfied. This configuration can further improve the usage efficiency of the image light ray L1 from the display element 2.

In the optical system 3, central axes C3 of the recessed or protruded parts 613a in the third diffraction structure 613 are inclined relative to the thickness direction T1 of the body 40. This configuration can further improve the usage efficiency of the image light ray L1 from the display element 2.

In the optical system 3, when inclined angles of the central axes C1 of the recessed or protruded parts 611a in the first diffraction structure 611 relative to the thickness direction T1 of the body 40 are denoted by $\theta a$ and inclined angles of the central axes C3 of the recessed or protruded parts 613a in the third diffraction structure 613 relative to the thickness direction T1 of the body 40 are denoted by $\theta c$, a relation of $0.9 < \theta a/\theta c < 1.1$ is satisfied. This configuration can further improve the usage efficiency of the image light ray L1 from the display element 2.

In the optical system 3, the reproduction region 6 includes an exit structure (the second diffraction structure region 62) allowing the image light ray L1 entering the body 40 from the in-coupling region 5 to emerge from the body 40 toward the field of view region 8. This configuration does not require provision of another exit structure different from the reproduction region 6 and can downsize the light guide 4.

In the optical system 3, the first diffraction structure region 61 includes a first end 61a on a side of the in-coupling region 5 in the first propagation direction and a second end 61b on an opposite side from the in-coupling region 5 in the first propagation direction D1. The first diffraction structure 611 is in at least a region R11 occupying a quarter of the first diffraction structure region 61 from the first end 61a of the first diffraction structure region 61 in the first propagation direction. This configuration can further improve the usage efficiency of the image light ray L1 from the display element 2.

In the optical system 3, the second diffraction structure 612 is in at least a region R12 occupying a half of the diffraction structure region 61 from the first end 61a of the diffraction structure region 61 in the first propagation direction. This configuration can further improve the usage efficiency of the image light ray L1 from the display element 2.

In the optical system 3, the third diffraction structure 613 is at least on an opposite side of the second diffraction structure 612 from the first diffraction structure 611 in the first propagation direction and in a region R13 occupying a quarter of the diffraction structure region 61 from the second end 61b of the diffraction structure region 61 in the first propagation direction. This configuration can further improve the usage efficiency of the image light ray L1 from the display element 2.

The optical system 3 further includes a projection optical system 7 allowing the image light ray L1 to be incident on the in-coupling region 5 of the light guide 4 as a substantial collimate light ray. This configuration can further improve the usage efficiency of the image light ray L1 from the display element 2.

The aforementioned image display device 1 includes the optical system 3 and the display element 2. This configuration can improve the usage efficiency of the image light ray L1 from the display element 2.

[2. VARIATIONS]

Embodiments of the present disclosure are not limited to the above embodiment. The above embodiment may be modified in various ways in accordance with designs or the like to an extent that they can achieve the problem of the present disclosure. Hereinafter, some variations or modifications of the above embodiment will be listed. One or more of the variations or modifications described below may apply in combination with one or more of the others.

[2.1 VARIATION 1]

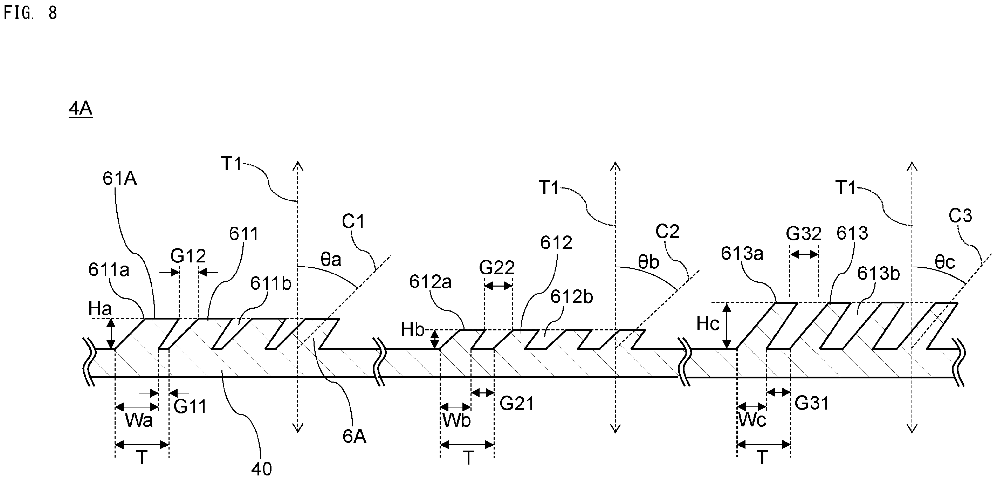

Fig. 8 is a partial sectional view of a light guide 4A according to variation 1. In detail, Fig. 8 is a section of part including the first diffraction structure region 61A of the reproduction region 6A, of the light guide 4A.

The first diffraction structure region 61A of Fig. 8 includes the first diffraction structure 611, the second diffraction structure 612, and the third diffraction structure 613 in a similar manner to the first diffraction structure region 61 of Fig. 3. The first diffraction structure region 61A of Fig. 8 is different from the first diffraction structure region 61 of Fig. 3 in shapes and dimensions of recessed or protruded parts, namely, shapes and dimensions of the recessed or protruded parts 611a of the first diffraction structure 611, the recessed or protruded parts 612a of the second diffraction structure 612, and the recessed or protruded parts 613a of the third diffraction structure 613.

In the present variation, T = 320 nm, Ha = 100 nm, Wa = 250 nm, Hb = 60 nm, Wb = 160 nm, Hc = 200 nm, and Wc = 160 nm.

Thus, Ha > Hb and the formula (1) is satisfied. Wa > Wb and the formula (2) is satisfied. Ha/T = 0.31 and the formula (3) is satisfied. Wa/T = 0.78 and the formula (4) is satisfied. Ha/Hb = 1.67 and the formula (5) is satisfied. Obviously, the aforementioned mathematical values satisfy the formulae (6) to (9).

Accordingly, in the first diffraction structure region 61A of Fig. 8, the first diffraction structure 611 may have the diffraction efficiency property satisfying the relation of Ea1 > Ea2. The second diffraction structure 612 may have the diffraction efficiency property satisfying the relation of Eb1 ≥ Eb2. The third diffraction structure 613 may have the diffraction efficiency property satisfying the relation of Ec1 < Ec2. Therefore, the light guide 4A of Fig. 8 can improve the usage efficiency of the image light ray L1 from the display element 2.

[2.2 VARIATION 2]

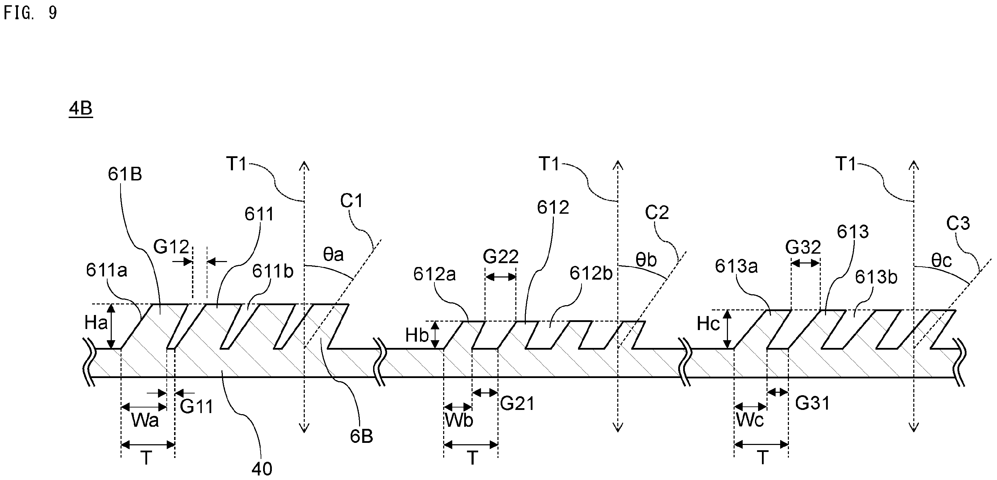

Fig. 9 is a partial sectional view of a light guide 4B according to variation 2. In detail, Fig. 9 is a section of part including the first diffraction structure region 61B of the reproduction region 6B, of the light guide 4B.

The first diffraction structure region 61B of Fig. 9 includes the first diffraction structure 611, the second diffraction structure 612, and the third diffraction structure 613 in a similar manner to the first diffraction structure region 61 of Fig. 3. The first diffraction structure region 61B of Fig. 9 is different from the first diffraction structure region 61 of Fig. 3 and the first diffraction structure region 61A of Fig. 8 in shapes and dimensions of recessed or protruded parts, namely, shapes and dimensions of the recessed or protruded parts 611a of the first diffraction structure 611, the recessed or protruded parts 612a of the second diffraction structure 612, and the recessed or protruded parts 613a of the third diffraction structure 613.

In the present variation, T = 320 nm, Ha = 180 nm, Wa = 280 nm, Hb = 80 nm, Wb = 180 nm, Hc = 150 nm, and Wc = 180 nm.

Thus, Ha > Hb and the formula (1) is satisfied. Wa > Wb and the formula (2) is satisfied. Ha/T = 0.56 and the formula (3) is satisfied. Wa/T = 0.88 and the formula (4) is satisfied. Ha/Hb = 2.25 and the formula (5) is satisfied. In contrast, the grating heights Ha and Hc do not satisfy the formula (6) but the grating heights Hb and Hc satisfy the formula (7). The grating widths Wa and Wc satisfy the formula (8) but the grating widths Wb and Wc do not satisfy the formula (9).

The first diffraction structure region 61B of Fig. 9 satisfying the above formulae (1) to (5) allows the first diffraction structure 611 to have the diffraction efficiency property satisfying the relation of Ea1 > Ea2. The second diffraction structure 612 may have the diffraction efficiency property satisfying the relation of Eb1 ≥ Eb2. Accordingly, the light guide 4B of Fig. 9 can improve the usage efficiency of the image light ray L1 from the display element 2.

In the present variation, the grating heights Ha, Hb, and Hc do not satisfy the relation of Ha < Hc but satisfy the relation of Hb < Hc. In this regard, the grating heights Ha, Hb, and Hc may satisfy at least one of the relation of Ha < Hc or the relation of Hb < Hc but may preferably satisfy the relation of Ha < Hc and the relation of Hb < Hc both. This configuration can further improve the usage efficiency of the image light ray L1 from the display element 2.

In the present variation, the grating widths Wa, Wb, and Wc satisfy the relation of Wc < Wa but do not satisfy the relation of Wc < Wb. In this regard, the grating widths Wa, Wb, and Wc may satisfy at least one of the relation of Wc < Wa or the relation of Wc < Wb but may preferably satisfy the relation of Wc < Wa and the relation of Wc < Wb both. This configuration can further improve the usage efficiency of the image light ray L1 from the display element 2.

[2.3 VARIATION 3]

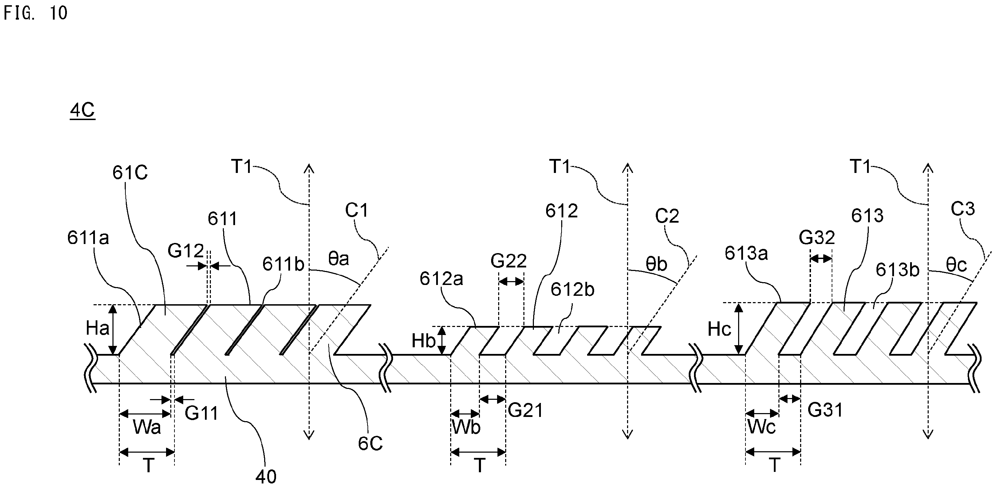

Fig. 10 is a partial sectional view of a light guide 4C according to variation 3. In detail, Fig. 9 is a section of part including the first diffraction structure region 61C of the reproduction region 6C, of the light guide 4C.

The first diffraction structure region 61C of Fig. 10 includes the first diffraction structure 611, the second diffraction structure 612, and the third diffraction structure 613 in a similar manner to the first diffraction structure region 61 of Fig. 3.

In the first diffraction structure region 61C of Fig. 10, the recessed or protruded parts 611a in the first diffraction structure 611 do not have shapes allowing distances between the recessed or protruded parts 611a in the periodic direction to become greater toward the outside of the body 40 than at the inside of the body 40 in the thickness direction T1 of the body 40, and therefore the distances between the recessed or protruded parts 611a in the periodic direction are constant. Therefore, the distances G11 between the recessed or protruded parts 611a at the base end sides (lower end sides in Fig. 10) of the recessed or protruded parts 611a are equal to the distances G12 between the recessed or protruded parts 611a at the top end sides (upper end sides in Fig. 10) of the recessed or protruded parts 611a.

In the first diffraction structure region 61C of Fig. 10, the recessed or protruded parts 612a in the second diffraction structure 612 do not have shapes allowing distances between the recessed or protruded parts 612a in the periodic direction to become greater toward the outside of the body 40 than at the inside of the body 40 in the thickness direction T1 of the body 40, and therefore the distances between the recessed or protruded parts 612a in the periodic direction are constant. Therefore, the distances G21 between the recessed or protruded parts 612a at the base end sides (lower end sides in Fig. 10) of the recessed or protruded parts 612a are equal to the distances G22 between the recessed or protruded parts 612a at the top end sides (upper end sides in Fig. 10) of the recessed or protruded parts 612a.

In the first diffraction structure region 61C of Fig. 10, the recessed or protruded parts 613a in the third diffraction structure 613 do not have shapes allowing distances between the recessed or protruded parts 613a in the periodic direction to become greater toward the outside of the body 40 than at the inside of the body 40 in the thickness direction T1 of the body 40, and therefore the distances between the recessed or protruded parts 613a in the periodic direction are constant. Therefore, the distances G31 between the recessed or protruded parts 613a at the base end sides (lower end sides in Fig. 10) of the recessed or protruded parts 613a are equal to the distances G32 between the recessed or protruded parts 613a at the top end sides (upper end sides in Fig. 10) of the recessed or protruded parts 613a.

In the present variation, as one example, $T = 320$ nm, $Ha = 200$ nm, $Wa = 300$ nm, $Hb = 100$ nm, $Wb = 160$ nm, $Hc = 250$ nm, and $Wc = 180$ nm. Thus, $Ha > Hb$ and the formula (1) is satisfied. $Wa > Wb$ and the formula (2) is satisfied. $Ha/T = 0.625$ and the formula (3) is satisfied. $Wa/T = 0.9375$ and the formula (4) is satisfied. $Ha/Hb = 2$ and the formula (5) is satisfied. Obviously, the aforementioned mathematical values satisfy the formulae (6) to (9).

Accordingly, in the first diffraction structure region 61C of Fig. 10, the first diffraction structure 611 may have the diffraction efficiency property satisfying the relation of $Ea1 > Ea2$. The second diffraction structure 612 may have the diffraction efficiency property satisfying the relation of $Eb1 \geq Eb2$. The third diffraction structure 613 may have the diffraction efficiency property satisfying the relation of $Ec1 < Ec2$. Therefore, the light guide 4C of Fig. 10 can improve the usage efficiency of the image light ray L1 from the display element 2.

From the present variation, the recessed or protruded parts 611a in the first diffraction structure 611 may not always have shapes allowing distances between the recessed or protruded parts 611a in the periodic direction to become greater toward the outside of the body 40 than at the inside of the body 40 in the thickness direction T1 of the body 40.

From the present variation, the recessed or protruded parts 612a in the second diffraction structure 612 may not always have shapes allowing distances between the recessed or protruded parts 612a in the periodic direction to become greater toward the outside of the body 40 than at the inside of the body 40 in the thickness direction T1 of the body 40.

From the present variation, the recessed or protruded parts 613a in the third diffraction structure 613 may not always have shapes allowing distances between the recessed or protruded parts 612a in the periodic direction to become greater toward the outside of the body 40 than at the inside of the body 40 in the thickness direction T1 of the body 40.

[2.4 VARIATION4]

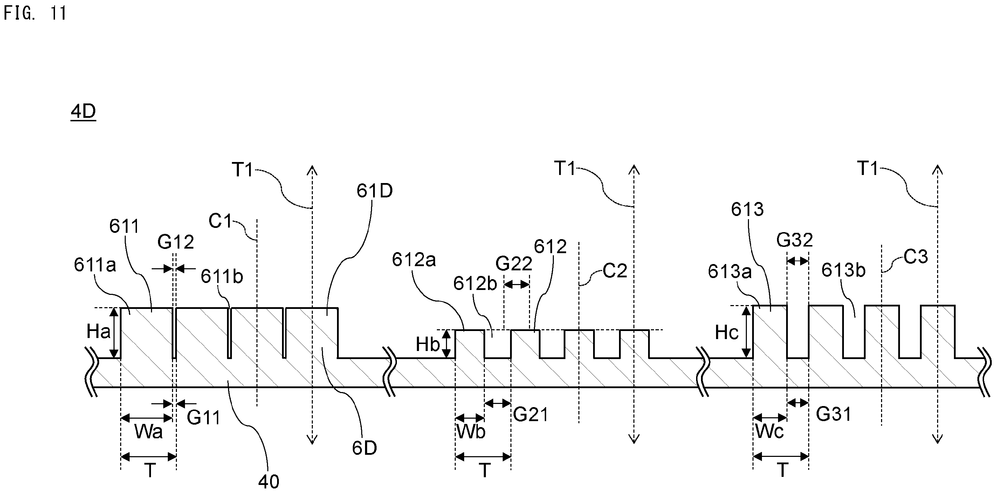

Fig. 11 is a partial sectional view of a light guide 4D according to variation 4. In detail, Fig. 11 is a section of part including the first diffraction structure region 61D of the reproduction region 6D, of the light guide 4D.

The first diffraction structure region 61D of Fig. 11 includes the first diffraction structure 611, the second diffraction structure 612, and the third diffraction structure 613 in a similar manner to the first diffraction structure region 61 of Fig. 3.

In the first diffraction structure region 61D of Fig. 11, the center axes C1 of the recessed or protruded parts 611a in the first diffraction structure 611 are not inclined relative to but are parallel to the thickness direction T1 of the body 40.

In the first diffraction structure region 61D of Fig. 11, the center axes C2 of the recessed or protruded parts 612a in the second diffraction structure 612 are not inclined relative to but are parallel to the thickness direction T1 of the body 40.

In the first diffraction structure region 61D of Fig. 11, the center axes C3 of the recessed or protruded parts 613a in the third diffraction structure 613 are not inclined relative to but are parallel to the thickness direction T1 of the body 40.

In the present variation, as one example, $T = 320$ nm, $Ha = 200$ nm, $Wa = 300$ nm, $Hb = 100$ nm, $Wb = 160$ nm, $Hc = 250$ nm, and $Wc = 180$ nm. Thus, $Ha > Hb$ and the formula (1) is satisfied. $Wa > Wb$ and the formula (2) is satisfied. $Ha/T = 0.625$ and the formula (3) is satisfied. $Wa/T = 0.9375$ and the formula (4) is satisfied. $Ha/Hb = 2$ and the formula (5) is satisfied. Obviously, the aforementioned mathematical values satisfy the formulae (6) to (9).

Accordingly, in the first diffraction structure region 61D of Fig. 11, the first diffraction structure 611 may have the diffraction efficiency property satisfying the relation of $Ea1 > Ea2$. The second diffraction structure 612 may have the diffraction efficiency property satisfying the relation of $Eb1 \geq Eb2$. The third diffraction structure 613 may have the diffraction efficiency property satisfying the relation of $Ec1 < Ec2$. Therefore, the light guide 4D of Fig. 11 can improve the usage efficiency of the image light ray L1 from the display element 2.

From the present variation, the center axes C1 of the recessed or protruded parts 611a in the first diffraction structure 611 may not be necessarily inclined relative to be the thickness direction T1 of the body 40.

From the present variation, the center axes C2 of the recessed or protruded parts 612a in the second diffraction structure 612 may not be necessarily inclined relative to be the thickness direction T1 of the body 40.

From the present variation, the center axes C3 of the recessed or protruded parts 613a in the third diffraction structure 613 may not be necessarily inclined relative to be the thickness direction T1 of the body 40.

[2.5 VARIATION5]

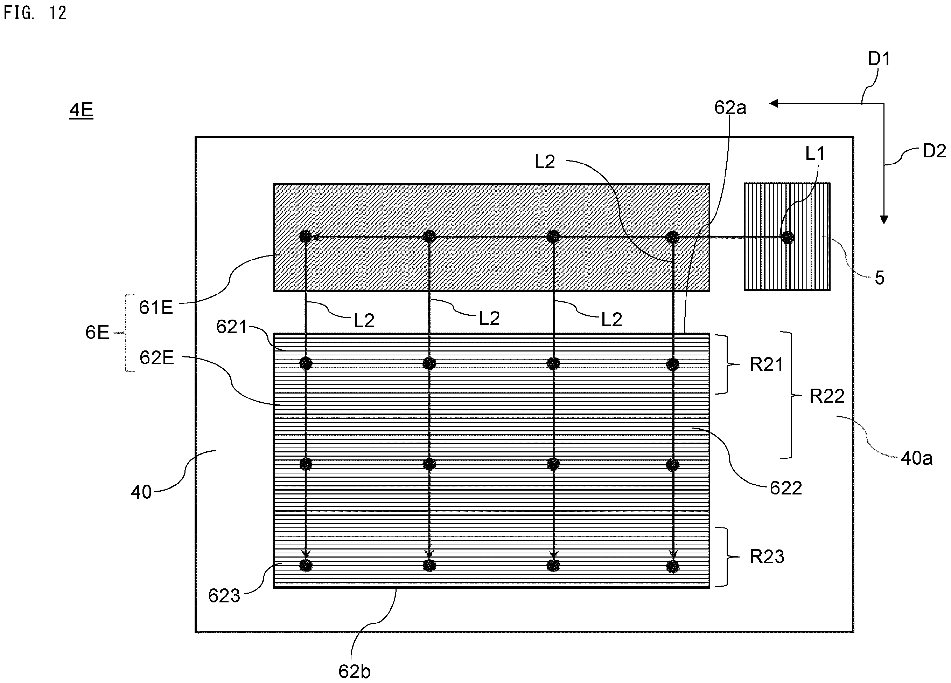

Fig. 12 is a plan view of a light guide 4E according to variation 5. As shown in Fig. 12, the in-coupling region 5 and the reproduction region 6E are formed at the first surface 40a of the body 40 of the light guide 4.

The reproduction region 6E of Fig. 12 includes a first diffraction structure region 61E and a second diffraction structure region 62E.

The first diffraction structure region 61E is located to be arranged side by side with the in-coupling region 5 in the first direction D1. The first diffraction structure region 61E is a surface-relief diffraction grating and includes recessed or protruded parts arranged periodically. The first diffraction structure region 61E is a reflection diffraction grating. The first diffraction structure region 61E is configured to divide the image light ray L1 propagating in the first propagation direction intersecting the thickness direction of the body 40 into, the plurality of image light rays L2 propagating in the second propagation direction intersecting the first propagation direction, in the first propagation direction. In the first diffraction structure region 61E, the first direction D1 is the first propagation direction and the second direction D2 is the second propagation direction. The first diffraction structure region 61E allows the plurality of image light rays L2 arranged in the first direction D1 to travel toward the second diffraction structure region 62E, by dividing the image light ray L1 propagating inside the body 40 of the light guide 4. By doing so, the first diffraction structure region 61E realizes pupil expansion of the image light ray L1 in the first direction D1.

The first diffraction structure region 61E is constituted by recessed or protruded parts in relation to the thickness direction of the body 40 arranged to have periodicity in the periodic direction similarly to the first diffraction structure region 61 but is different from the first diffraction structure region 61 in that the first diffraction structure region 61E does not include diffraction structures different depending on their positions, such as the first to third diffraction structures 611 to 613.

The second diffraction structure region 62E of Fig. 12 is located to be arranged side by side with the first diffraction structure region 61E in the second direction D2. The second diffraction structure region 62E is a surface-relief diffraction grating and includes recessed or protruded parts arranged periodically. The second diffraction structure region 62E is a transmission diffraction grating. The second diffraction structure region 62E is configured to divide the image light ray L2 propagating in the first propagation direction intersecting the thickness direction of the body 40 into, the plurality of image light rays L3 propagating in the second propagation direction intersecting the first propagation direction, in the first propagation direction. In the second diffraction structure region 62, the second direction D2 is the first propagation direction and the third direction D3 is the second propagation direction. The second diffraction structure region 62E allows the plurality of image light rays L3 arranged in the second direction D2 to travel toward the field of view region 8, by dividing the image light ray L2 propagating inside the body 40 of the light guide 4E. By doing so, the second diffraction structure region 62E realizes pupil expansion of the image light ray in the second direction D2.

The second diffraction structure region 62E of Fig. 12 includes a first diffraction structure 621, a second diffraction structure 622, and a third diffraction structure 623. The second diffraction structure 622 is on an opposite side of the first diffraction structure 621 from the in-coupling region 5 in the first propagation direction (the second direction D2). The third diffraction structure 623 is on an opposite side of the second diffraction structure 622 from the first diffraction structure 621 in the first propagation direction (the second direction D2). In other words, the first diffraction structure 621, the second diffraction structure 622, and the third diffraction structure 623 are arranged in this order in the first propagation direction (the second direction D2).

As shown in Fig. 12, the second diffraction structure region 62E includes a first end 62a on a side of the in-coupling region 5 in the first propagation direction (the second direction D2), and a second end 62b on an opposite side from the in-coupling region 5 in the first propagation direction (the second direction D2). The first diffraction structure 621 is at least in a region R21 occupying a quarter of the second diffraction structure region 62E from the first end 62a of the second diffraction structure region 62E in the first propagation direction. The second diffraction structure 622 is at least in a region R22 occupying a half of the second diffraction structure region 62E from the first end 62a of the second diffraction structure region 62E in the first propagation direction. The third diffraction structure 623 is at least on an opposite side of the second diffraction structure 622 from the first diffraction structure 621 in the first propagation direction and in a region R23 occupying a quarter of the second diffraction structure region 62E from the second end 62b of the second diffraction structure region 62E in the first propagation direction. In one example, in the second diffraction structure region 62E, the region R21 may be occupied by the first diffraction structure 621, the region R23 may be occupied by the third diffraction structure 623, and a region between the region R21 and the region R23 may be occupied by the second diffraction structure 622.

The second diffraction structure region 62E is constituted by plurality of recessed or protruded parts in relation to the thickness direction of the body 40 which are arranged to have periodicity in a periodic direction. The plurality of recessed or protruded parts include recessed or protruded parts of the first diffraction structure 621, recessed or protruded parts of the second diffraction structure 622, and recessed or protruded parts of the third diffraction structure 623. The recessed or protruded parts are protruded parts protruding from the body 40. The periodic direction is a direction where the recessed or protruded parts are arranged to have periodicity. The periodic direction includes a component of the first propagation direction (for the second diffraction structure region 62E, the second direction D2). To convert the image light ray L2 propagating in the second direction D2 into the image light rays L3 propagating in the third direction D3, the periodic direction is set to be the second direction D2. In this case, the periodic direction includes a component of the second direction D2 only. The periodic direction is a direction of a wave vector of the second diffraction structure region 62. For example, the recessed or protruded parts extend in the first direction D1 and are arranged at a predetermined interval in the second direction D2. In the second diffraction structure region 62, the grating period is constant. Therefore, the first diffraction structure 621, the second diffraction structure 622, and the third diffraction structure 623 have the same grating period. The grating period is a distance between the same positions of the adjacent two recessed or protruded parts in the periodic direction.

The first diffraction structure 621, the second diffraction structure 622, and the third diffraction structure 623 of the second diffraction structure region 62E have the same grating period but are different in at least one of a grating height and a grating width to have different diffraction efficiency properties. The grating heights and the grating widths of the first diffraction structure 621, the second diffraction structure 622, and the third diffraction structure 623 of the second diffraction structure region 62E may be set in a similar manner to the grating heights and the grating widths of the first diffraction structure 621, the second diffraction structure 622, and the third diffraction structure 623 of the first diffraction structure region 61 according to the above embodiment.

Accordingly, when the grating period of the second diffraction structure region 62E is denoted by T and the grating height (the height of the recessed or protruded part) of the first diffraction structure 621 is denoted by Ha, the grating period T and the grating height Ha may preferably satisfy the relation of $0.3 < Ha/T < 1.2$. When the grating width (the width of the recessed or protruded part) of the first diffraction structure 621 is denoted by Wa, the grating period T and the grating width Wa satisfy the relation of $0.7 < Wa/T < 1.0$. When the grating height (the height of the recessed or protruded part) of the second diffraction structure 622 is denoted by Hb, the grating height Ha and the grating height Hb satisfy the relation of $1.2 < Ha/Hb < 10.0$. Therefore, in the first diffraction structure 621, when the diffraction efficiency for a light ray which is the largest in the incident angle (the propagation angle) relative to the interface of the body 40, of light rays propagating in the second direction D2 is denoted by Ea1 and the diffraction efficiency for a light ray which is the smallest in the incident angle (the propagation angle) relative to the interface of the body 40, of light rays propagating in the second direction D2 is denoted by Ea2, the first diffraction structure 621 has the diffraction efficiency property satisfying the relation of $Ea1 > Ea2$. In the second diffraction structure 622, when the diffraction efficiency for a light ray which is the largest in the incident angle (the propagation angle) relative to the interface of the body 40, of light rays propagating in the second direction D2 is denoted by Eb1 and the diffraction efficiency for a light ray which is the smallest in the incident angle (the propagation angle) relative to the interface of the body 40, of light rays propagating in the second direction D2 is denoted by Eb2, the second diffraction structure 622 has the diffraction efficiency property satisfying the relation of $Eb1 \geq Eb2$. In the present variation, $Eb1 = Eb2$.

When the grating height of the third diffraction structure 623 is denoted by Hc, the grating heights Ha, Hb, and Hc satisfy the relation of $Ha < Hc$ and the relation of $Hb < Hc$. When the grating width of the third diffraction structure 623 is denoted by Wc, the grating widths Wa, Wb, and Wc satisfy the relation of $Wc < Wa$ and the relation of $Wc < Wb$. Therefore, in the third diffraction structure 623, when the diffraction efficiency for a light ray which is the largest in the incident angle (the propagation angle) relative to the interface of the body 40, of light rays propagating in the second direction D2 is denoted by Ec1 and the diffraction efficiency for a light ray which is the smallest in the incident angle (the propagation angle) relative to the interface of the body 40, of light rays propagating in the second direction D2 is denoted by Ec2, the third diffraction structure 623 has the diffraction efficiency property satisfying a relation of $Ec1 < Ec2$.

In the aforementioned second diffraction structure region 62E, the first diffraction structure 621 has the diffraction efficiency property satisfying the relation of $Ea1 > Ea2$. Thus, the first diffraction structure 621 can reduce amount of the exit light ray which does not arrive at the field of view region 8 in the second direction D2. Therefore, it is possible to improve the usage efficiency of the image light ray L1 from the display element 2. While, the first diffraction structure 621 can increase amount of the exit light ray which arrives at the field of view region 8 in the second direction D2. Therefore, it is possible to improve the usage efficiency of the image light ray L1 from the display element 2. The second diffraction structure 622 has the diffraction efficiency property satisfying the relation of $Eb1 = Eb2$. Therefore, the second diffraction structure 612 can reduce variations of light amounts of the exit light rays L11b, L12b, and Ll3b in the second direction D2. The third diffraction structure 623 has the diffraction efficiency property satisfying the relation of $Ec1 < Ec2$. Therefore, it is possible to increase an amount of the exit light ray which arrives at the field of view region 8 in the second direction D2. Thus, it is possible to improve the usage efficiency of the image light ray L1 from the display element 2. Consequently, the second diffraction structure region 62E can improve the usage efficiency of the image light ray L1 from the display element 2.

[2.6 OTHER VARIATIONS]

In one variation, it is not always necessary that the light guide 4 to 4E and the field of view region 8 are arranged in a straight line. In other words, the optical path from the light guide 4 to 4E to the field of view region 8 always need not be straight. For example, a light ray from the light guide 4 to 4E may be reflected by a reflector, a combiner, a window shield, or the like, to be incident on the field of view region 8. In this arrangement, the optical path from the light guide 4 to 4E to the field of view region 8 is not straight but an L-shape, for example.

In one variation, the shape and dimensions of the light guide 4 to 4E may be set to allow a user to visually perceive the virtual image even when the length of the optical path from the light guide 4 to 4E to the field of view region 8 is equal to or longer than 300 mm. In one example, when a dimension of the field of view region 8 corresponding to the first propagation direction (the first direction D1) of the reproduction region 6 is denoted by V1 and a dimension in the first propagation direction (the first direction D 1) of the reproduction region 6 is denoted by E1, a relation of $1.0 < E1/V1 < 5.0$ is satisfied. This arrangement allows the optical system 3 to apply to a head-up display (HUD) which is longer in a distance between a user and the optical system 3, 3A than HMD.

In one variation, the in-coupling region 5 is not limited to a surface-relief diffraction grating, but may include a volume holographic element (holographic diffraction grating) or a half mirror.

In one variation, the reproduction region 6 may be any of transmission or reflection surface-relief diffraction grating.

In one variation, a surface-relief diffraction grating may not be limited to being made of the same material as the light guide 4 to 4E but may be made of a different material therefrom. For example, the material of the light guide 4 to 4E is glass, and the material of the surface-relief diffraction grating is ultraviolet curable resin. In this arrangement, the surface-relief diffraction grating can be fabricated by nanoimprint techniques. Obviously, the in-coupling region 5 and the reproduction region 6 are not always need to be formed integrally with the body 40 but may be formed as separate parts from the body 40.

In one variation, the reproduction region 6 may include any one of the first diffraction structure region 61 to 61D and may include the second diffraction structure region 62E. Thus, the reproduction region 6 can reduce amount of exit light which does not arrive at the field of view region 8, by the first direction D1 and the second direction D2 both, thereby improving the usage efficiency of the image light ray L1 of the display element 2.

In one variation, the reproduction region 6 to 6E may not include the first diffraction structure region 61 and the second diffraction structure region 62 both. In this arrangement, the reproduction region 6 to 6E expands the pupil of the image light ray L1 in one direction only. For example, the first diffraction structure region 61 to 61E may be configured to allow the second propagation direction D2 to be a direction from the body 40 toward the field of view region 8. In other words, the first diffraction structure region 61 to 61E may define an exit structure configured to allow the image light ray L1 entering the body 40 by the in-coupling region 5 to emerge from the body 40 toward the field of view region 8.

In one variation, the recessed or protruded parts of the first diffraction structure region 61 to 61E may be any of protrusions (protruded parts), recessed parts, or combinations of protrusions and recessed parts as long as they can constitute a diffraction grating. The central axes of the recessed or protruded parts may be central axes of protrusions or central axes of recessed parts. This may apply to the second diffraction structure region 62, 62E in the same or similar manner.

In one variation, the projection optical system 7 may be constituted by a plurality of optical elements including a first optical element and a second optical element, rather than a single optical element. The first optical element is a compound lens where a negative meniscus lens and biconvex lens are combined, for example. The second optical element is a compound lens where a positive meniscus lens and a negative meniscus lens are combined, for example. Note that, the optical system 3 may not include the projection optical system 7.

In one variation, it is not always necessary that the projection optical system 7 and the in-coupling region 5 are arranged in a straight line. In other words, the optical path of the image light ray L1 from the projection optical system 7 toward the in-coupling region 5 always need not be straight. For example, the image light ray L1 from the projection optical system 7 may be reflected by a reflection plate to be incident on the in-coupling region 5. In this arrangement, the optical path of the image light ray L1 from the projection optical system 7 toward the in-coupling region 5 is not straight but an L-shape, for example.

In one variation, the image display device 1 may include a plurality of light guides 4 to 4E respectively corresponding to wavelengths of light included in the image light ray L1. This enables provision of a color image to a user.

[3. ASPECTS]

As apparent from the above embodiment and variations, the present disclosure includes the following aspects. Hereinafter, reference signs in parenthesis are attached for the purpose of clearly showing correspondence with the embodiments only.

A first aspect is an optical system (3) and includes a light guide (4; 4A; 4B; 4C; 4D; 4E) for guiding an image light ray (L1) which is output from a display element (2) and forms an image, to a field of view region (8) of a user as a virtual image. The light guide (4; 4A; 4B; 4C; 4D; 4E) includes: a body (40) having a plate shape; an in-coupling region (5) formed at the body (40) and allowing the image light ray (L1) to enter the body (40) so that the image light ray (L1) propagates inside the body (40); and a reproduction region (6; 6A; 6B; 6C; 6D; 6E) formed at the body (40) and including a diffraction structure region (61) which constitutes a surface-relief diffraction grating dividing an image light ray (L1) propagating in a first propagation direction (D1) intersecting a thickness direction (T1) of the body (40) into a plurality of image light rays (L2) propagating in a second propagation direction (D2) intersecting the first propagation direction (D1), in the first propagation direction (D1). The diffraction structure region (61) includes a first diffraction structure (611), and a second diffraction structure (612) on an opposite side of the first diffraction structure (611) from the in-coupling region (5) in the first propagation direction (D1). A grating height of the first diffraction structure

(611) is greater than a grating height of the second diffraction structure (612). A grating width of the first diffraction structure (611) is greater than a grating width of the second diffraction structure (612). This aspect can improve the usage efficiency of the image light ray (L1) from the display element (2).

A second aspect is an optical system (3) based on the first aspect. In the second aspect, the diffraction structure region (61) satisfies relations of $0.3 < Ha/T < 1.2$, $0.7 < Wa/T < 1.0$, and $1.2 < Ha/Hb < 10.0$. T denotes a grating period of the diffraction structure region (61). Ha denotes the grating height of the first diffraction structure (611). Wa denotes the grating width of the first diffraction structure (611). Hb denotes the grating height of the second diffraction structure (612). This aspect can improve the usage efficiency of the image light ray (L1) from the display element (2).

A third aspect is an optical system (3) based on the first or second aspect. In the third aspect, the first diffraction structure (611) has a diffraction efficiency property which allows a diffraction efficiency for a light ray (L12) which is the largest in an incident angle relative to an interface of the body (40), of light rays propagating in the first propagation direction (D1) to be greater than a diffraction efficiency for a light ray (L13) which is the smallest in the incident angle relative to the interface of the body (40), of light rays propagating in the first propagation direction (D1). This aspect can further improve the usage efficiency of the image light ray (L1) from the display element (2).

A fourth aspect is an optical system (3) based on the third aspect. In the fourth aspect, the second diffraction structure (612) has a diffraction efficiency property which allows a diffraction efficiency for a light ray (L12) which is the largest in the incident angle relative to the interface of the body (40), of light rays propagating in the first propagation direction (D1) to be equal to or greater than a diffraction efficiency for a light ray (L13) which is the smallest in the incident angle relative to the interface of the body (40), of light rays propagating in the first propagation direction (D1). This aspect can further improve the usage efficiency of the image light ray (L1) from the display element (2).

A fifth aspect is an optical system (3) based on any one of the first to fourth aspects. In the fifth aspect, the diffraction structure region (61) further includes a third diffraction structure (613). The third diffraction structure (613) is on an opposite side of the second diffraction structure (612) from the first diffraction structure (611) in the first propagation direction (D1). The diffraction structure region (61) satisfies at least one of a relation of $Ha < Hc$ or a relation of $Hb < Hc$. Hc denotes a grating height of the third diffraction structure (613). This aspect can further improve the usage efficiency of the image light ray (L1) from the display element (2).

In the fifth aspect, the diffraction structure region (61) preferably satisfies the relation of $Ha < Hc$ and the relation of $Hb < Hc$ both. This case can further improve the usage efficiency of the image light ray (L1) from the display element (2).

A sixth aspect is an optical system (3) based on the fifth aspect. In the sixth aspect, the diffraction structure region (61) satisfies at least one of a relation of $Wc < Wa$ or a relation of $Wc < Wb$. Wa denotes the grating width of the first diffraction structure (611). Wb denotes the grating width of the second diffraction structure (612). Wc denotes a grating width of the third diffraction structure (613). This aspect can further improve the usage efficiency of the image light ray (L1) from the display element (2).

In the sixth aspect, the diffraction structure region (61) preferably satisfies the relation of $Wc < Wa$ and the relation of $Wc < Wb$ both. This case can further improve the usage efficiency of the image light ray (L1) from the display element (2).

A seventh aspect is an optical system (3) based on the fifth or sixth aspect. In the seventh aspect, the third diffraction structure (613) has a diffraction efficiency property which allows a diffraction efficiency for a light ray (L12) which is the largest in the incident angle relative to the interface of the body (40), of light rays propagating in the first propagation direction (D1) to be smaller than a diffraction efficiency for a light ray (L13) which is the smallest in the incident angle relative to the interface of the body (40), of light rays propagating in the first propagation direction (D1). This aspect can further improve the usage efficiency of the image light ray (L1) from the display element (2).

An eighth aspect is an optical system (3) based on any one of the first to seventh aspects. In the eighth aspect, the diffraction structure region (61) is constituted by recessed or protruded parts (611a, 612a, 613a) in relation to the thickness direction (T1) of the body (40)

which are arranged to have a periodicity in a periodic direction including a component of the first propagation direction (D1). Central axes (C1) of the recessed or protruded parts (611a) in the first diffraction structure (611) are inclined relative to the thickness direction (T1) of the body (40). This aspect can further improve the usage efficiency of the image light ray (L1) from the display element (2).

A ninth aspect is an optical system (3) based on the eighth aspect. In the ninth aspect, the recessed or protruded parts (611a) in the first diffraction structure (611) have shapes allowing distances between the recessed or protruded parts (611a) in the periodic direction to become greater toward an outside of the body (40) than at an inside of the body (40) in the thickness direction (T1) of the body (40). This aspect enables facilitation of manufacture of the light guide (4).

A tenth aspect is an optical system (3) based on the eighth or ninth aspect. In the tenth aspect, central axes (C2) of the recessed or protruded parts (612a) in the second diffraction structure (612) are inclined relative to the thickness direction (T1) of the body (40). This aspect can further improve the usage efficiency of the image light ray (L1) from the display element (2).

An eleventh aspect is an optical system (3) based on the tenth aspect. In the eleventh aspect, when inclined angles of the central axes (C1) of the recessed or protruded parts (611a) in the first diffraction structure (611) relative to the thickness direction (T1) of the body (40) are denoted by θa and inclined angles of the central axes (C2) of the recessed or protruded parts (612a) in the second diffraction structure (612) relative to the thickness direction (T1) of the body (40) are denoted by θb, a relation of 0.9 < θa/θb < 1.1 is satisfied. This aspect can further improve the usage efficiency of the image light ray (L1) from the display element (2).

A twentieth aspect is an optical system (3) based on any one of the eighth to eleventh aspects. In the twentieth aspect, the diffraction structure region (61) further includes a third diffraction structure (613). The third diffraction structure (613) is on an opposite side of the second diffraction structure (612) from the first diffraction structure (611) in the first propagation direction (D1). The diffraction structure region (61) satisfies at least one of a relation of Ha < Hc or a relation of Hb < Hc. Hc denotes a grating height of the third diffraction structure (613). Central axes (C3) of the recessed or protruded parts (613a) in the third diffraction structure (613) are inclined relative to the thickness direction (T1) of the body (40). This aspect can further improve the usage efficiency of the image light ray (L1) from the display element (2).

In the twelfth aspect, the diffraction structure region (61) may satisfy at least one of a relation of Wc < Wa or a relation of Wc < Wb. Wa denotes a grating width of the first diffraction structure (611). Wb denotes a grating width of the second diffraction structure (612). Wc denotes a grating width of the third diffraction structure (613). This aspect can further improve the usage efficiency of the image light ray (L1) from the display element (2).

A thirteenth aspect is an optical system (3) based on the twelfth aspect. In the thirteenth aspect, when inclined angles of the central axes (C1) of the recessed or protruded parts (611a) in the first diffraction structure (611) relative to the thickness direction (T1) of the body (40) are denoted by θa and inclined angles of the central axes (C3) of the recessed or protruded parts (613a) in the third diffraction structure (613) relative to the thickness direction (T1) of the body (40) are denoted by θc, a relation of 0.9 < θa/θc < 1.1 is satisfied. This aspect can further improve the usage efficiency of the image light ray (L1) from the display element (2).

A fourteenth aspect is an optical system (3) based on any one of the first to thirteenth aspects. In the fourteenth aspect, the reproduction region (6; 6A; 6B; 6C; 6D; 6E) includes an exit structure (62) allowing the image light ray (L1) entering the body (40) from the in-coupling region (5) to emerge from the body (40) toward the field of view region (8). This aspect does not require provision of another exit structure different from the reproduction region (6; 6A; 6B; 6C; 6D; 6E) and can downsize the light guide (4).

A fifteenth aspect is an optical system (3) based on any one of the first to fourteenth aspects. In the fifteenth aspect, when a dimension of the field of view region (8) corresponding to the first propagation direction (D1) of the reproduction region (6; 6A; 6B; 6C; 6D; 6E) is denoted by V1 and a dimension in the first propagation direction (D1) of the reproduction region (6; 6A; 6B; 6C; 6D; 6E) is denoted by E1, a relation of 1.0 < E1/V1 < 5.0 is satisfied. This aspect enables application of the optical system (3) to a HUD or the like which is further in the distance between the user and the optical system (3) than an HMD.

A sixteenth aspect is an optical system (3) based on any one of the first to fifteenth aspects. In the sixteenth aspect, the diffraction structure region (61) includes a first end (61a) on a side of the in-coupling region (5) in the first propagation direction (D1) and a second end (61b) on an opposite side from the in-coupling region (5) in the first propagation direction (D1). The first diffraction structure (611) is in at least a region (R11) occupying a quarter of the diffraction structure region (61, 62) from the first end (61a) of the diffraction structure region (61, 62) in the first propagation direction (D1). This aspect can further improve the usage efficiency of the image light ray (L1) from the display element (2).

A seventeenth aspect is an optical system (3) based the sixteenth aspect. In the seventeenth aspect, the second diffraction structure (612) is in at least a region (R12) occupying a half of the diffraction structure region (61) from the first end (61a) of the diffraction structure region (61) in the first propagation direction (D1). This aspect can further improve the usage efficiency of the image light ray (L1) from the display element (2).

An eighteenth aspect is an optical system (3) based on the sixteenth or seventeenth aspect. In the eighteenth aspect, the diffraction structure region (61) further includes a third diffraction structure (613). The third diffraction structure (613) is at least on an opposite side of the second diffraction structure (612) from the first diffraction structure (611) in the first propagation direction (D1) and in a region (R13) occupying a quarter of the diffraction structure region (61) from the second end (61b) of the diffraction structure region (61) in the first propagation direction (D1). The diffraction structure region (61) satisfies at least one of a relation of Ha < Hc or a relation of Hb < Hc. Ha denotes the grating height of the first diffraction structure (611). Hb denotes the grating height of the second diffraction structure (612). Hc denotes a grating height of the third diffraction structure (613). This aspect can further improve the usage efficiency of the image light ray (L1) from the display element (2).

A nineteenth aspect is an optical system (3) based on any one of the first to eighteenth aspects. In the nineteenth aspect, the optical system (3) further includes a projection optical system (7) allowing the image light ray (L1) to be incident on the in-coupling region (5) of the light guide (4; 4A; 4B; 4C; 4D; 4E) as a substantial collimate light ray. This aspect can further improve the usage efficiency of the image light ray (L1) from the display element (2).

A twentieth aspect is an image display device (1) and includes the optical system (3) according to any one of the first to nineteenth aspects, and the display element (2). This aspect can improve the usage efficiency of the image light ray (L 1) from the display element (2).

The aforementioned second to nineteenth aspects are optional.

As above, as examples of techniques in the present disclosure, the embodiments are described. For this purpose, the attached drawings and the description are provided. Therefore, components described in the attached drawings and the description may include not only components necessary for solving problems but also components which are unnecessary for solving problems but useful for exemplifying the above techniques. Note that, such unnecessary components should not be considered as necessary just for the reason why such unnecessary components are described in the attached drawings and the description. Further, the embodiment described above is just prepared for exemplifying the techniques in the present disclosure and thus may be subjected to various modification, replacement, addition, omission, or the like within the scope defined by claims and those equivalent range.

INDUSTRIAL APPLICABILITY

The present disclosure is applicable to optical systems and image display devices. In more detail, the present disclosure is applicable to an optical system for guiding an image light ray from a display element to a field of view region of a user as a virtual image, and an image display device including this optical system.

REFERENCE SIGNS LIST

1 Image Display Device
2 Display Element
3 Optical System
4, 4A, 4B, 4C, 4D, 4E Light Guide
40 Body
5 In-coupling Region
6, 6A, 6B, 6C, 6D, 6E Reproduction Region
61 First Diffraction Structure Region (Diffraction Structure Region)
61a First End
61b Second End
R11, R12, R13 Region
611 First Diffraction Structure
611a Recessed or Protruded Part
612 Second Diffraction Structure
612a Recessed or Protruded Part
613 Third Diffraction Structure
613a Recessed or Protruded Part
62 Second Diffraction Structure Region (Diffraction Structure Region, Exit Structure)
7 Projection Optical System
8 Field of View Region
L1, L2 Image Light Ray
D1 First Direction (First Propagation Direction)
D2 Second Direction (Second Propagation Direction)
T1 Thickness Direction
C1, C2, C3 Central Axis

**Claims**

1.  An optical system comprising:

    a light guide for guiding an image light ray which is output from a display element and forms an image, to a field of view region of a user as a virtual image,
    the light guide including:

    a body having a plate shape;
    an in-coupling region formed at the body and allowing the image light ray to enter the body so that the image light ray propagates inside the body; and
    a reproduction region formed at the body and including a diffraction structure region which constitutes a surface-relief diffraction grating dividing an image light ray propagating in a first propagation direction intersecting a thickness direction of the body into a plurality of image light rays propagating in a second propagation direction intersecting the first propagation direction, in the first propagation direction,

the diffraction structure region including a first diffraction structure, and a second diffraction structure on an opposite side of the first diffraction structure from the in-coupling region in the first propagation direction,
a grating height of the first diffraction structure being greater than a grating height of the second diffraction structure, and
a grating width of the first diffraction structure being greater than a grating width of the second diffraction structure.

2. The optical system according to claim 1, wherein:

the diffraction structure region satisfies relations of

$$0.3 < Ha/T < 1.2,$$

$$0.7 < Wa/T < 1.0,$$

and

$$1.2 < Ha/Hb < 10.0;$$

T denotes a grating period of the diffraction structure region;
Ha denotes the grating height of the first diffraction structure;
Wa denotes the grating width of the first diffraction structure; and
Hb denotes the grating height of the second diffraction structure.

3. The optical system according to claim 1 or 2, wherein the first diffraction structure has a diffraction efficiency property which allows a diffraction efficiency for a light ray which is the largest in an incident angle relative to an interface of the body, of light rays propagating in the first propagation direction to be greater than a diffraction efficiency for a light ray which is the smallest in the incident angle relative to the interface of the body, of light rays propagating in the first propagation direction.

4. The optical system according to claim 3, wherein the second diffraction structure has a diffraction efficiency property which allows a diffraction efficiency for a light ray which is the largest in the incident angle relative to the interface of the body, of light rays propagating in the first propagation direction to be equal to or greater than a diffraction efficiency for a light ray which is the smallest in the incident angle relative to the interface of the body, of light rays propagating in the first propagation direction.

5. The optical system according to any one of claims 1 to 4, wherein:

the diffraction structure region further includes a third diffraction structure;
the third diffraction structure is on an opposite side of the second diffraction structure from the first diffraction structure in the first propagation direction;
the diffraction structure region satisfies at least one of a relation of Ha < Hc or a relation of Hb < Hc;
Ha denotes the grating height of the first diffraction structure;
Hb denotes the grating height of the second diffraction structure; and
Hc denotes a grating height of the third diffraction structure.

6. The optical system according to claim 5, wherein:

the diffraction structure region satisfies at least one of a relation of Wc < Wa or a relation of Wc < Wb;
Wa denotes the grating width of the first diffraction structure;
Wb denotes the grating width of the second diffraction structure; and
Wc denotes a grating width of the third diffraction structure.

7. The optical system according to claim 5 or 6, wherein the third diffraction structure has a diffraction efficiency property which allows a diffraction efficiency for a light ray which is the largest in the incident angle relative to the interface of the body, of light rays propagating in the first propagation direction to be smaller than a diffraction efficiency for a light ray which is the smallest in the incident angle relative to the interface of the body, of light rays propagating in the first propagation direction.

8. The optical system according to any one of claims 1 to 7, wherein:

the diffraction structure region is constituted by recessed or protruded parts in relation to the thickness direction of the body which are arranged to have a periodicity in a periodic direction including a component of the first propagation direction; and

central axes of the recessed or protruded parts in the first diffraction structure are inclined relative to the thickness direction of the body.

9. The optical system according to claim 8, wherein the recessed or protruded parts in the first diffraction structure have shapes allowing distances between the recessed or protruded parts in the periodic direction to become greater toward an outside of the body than at an inside of the body in the thickness direction of the body.

10. The optical system according to claim 8 or 9, wherein central axes of the recessed or protruded parts in the second diffraction structure are inclined relative to the thickness direction of the body.

11. The optical system according to claim 10, wherein: when inclined angles of the central axes of the recessed or protruded parts in the first diffraction structure relative to the thickness direction of the body are denoted by $\theta a$ and inclined angles of the central axes of the recessed or protruded parts in the second diffraction structure relative to the thickness direction of the body are denoted by $\theta b$, a relation of $0.9 < \theta a/\theta b < 1.1$ is satisfied.

12. The optical system according to any one of claims 8 to 11, wherein:

the diffraction structure region further includes a third diffraction structure;
the third diffraction structure is on an opposite side of the second diffraction structure from the first diffraction structure in the first propagation direction;
the diffraction structure region satisfies at least one of a relation of Ha < Hc or a relation of Hb < He;
Hc denotes a grating height of the third diffraction structure; and
central axes of the recessed or protruded parts in the third diffraction structure are inclined relative to the thickness direction of the body.

13. The optical system according to claim 12, wherein: when inclined angles of the central axes of the recessed or protruded parts in the first diffraction structure relative to the thickness direction of the body are denoted by $\theta a$ and inclined angles of the central axes of the recessed or protruded parts in the third diffraction structure relative to the thickness direction of the body are denoted by $\theta c$, a relation of $0.9 < \theta a/\theta c < 1.1$ is satisfied.

14. The optical system according to any one of claims 1 to 13, wherein the reproduction region includes an exit structure allowing the image light ray entering the body from the in-coupling region to emerge from the body toward the field of view region.

15. The optical system according to any one of claims 1 to 14, wherein when a dimension of the field of view region corresponding to the first propagation direction of the reproduction region is denoted by V1 and a dimension in the first propagation direction of the reproduction region is denoted by E1, a relation of $1.0 < E1/V1 < 5.0$ is satisfied.

16. The optical system according to any one of claims 1 to 15, wherein:

the diffraction structure region includes a first end on a side of the in-coupling region in the first propagation direction and a second end on an opposite side from the in-coupling region in the first propagation direction; and
the first diffraction structure is in at least a region occupying a quarter of the diffraction structure region from the first end of the diffraction structure region in the first propagation direction.

17. The optical system according to claim 16, wherein the second diffraction structure is in at least a region occupying a half of the diffraction structure region from the first end of the diffraction structure region in the first propagation direction.

18. The optical system according to claim 16 or 17, wherein:

the diffraction structure region further includes a third diffraction structure;
the third diffraction structure is at least on an opposite side of the second diffraction structure from the first diffraction structure in the first propagation direction and in a region occupying a quarter of the diffraction structure region from the second end of the diffraction structure region in the first propagation direction;
the diffraction structure region satisfies at least one of a relation of Ha < Hc or a relation of Hb < He;
Ha denotes the grating height of the first diffraction structure;
Hb denotes the grating height of the second diffraction structure; and
Hc denotes a grating height of the third diffraction structure.

19. The optical system according to any one of claims 1 to 18, further comprising a projection optical system allowing the image light ray to be incident on the in-coupling region of the light guide as a substantial

22

collimate light ray.

20. An image display device comprising:

the optical system according to any one of claims 1 to 19; and
the display element.

FIG. 1

FIG. 2

EP 4 502 707 A1

FIG. 3

EP 4 502 707 A1

FIG. 4

FIG. 5

EP 4 502 707 A1

FIG. 6

FIG. 7

FIG. 8

EP 4 502 707 A1

FIG. 9

EP 4 502 707 A1

FIG. 10

EP 4 502 707 A1

FIG. 11

FIG. 12

EP 4 502 707 A1

| | INTERNATIONAL SEARCH REPORT | International application No. |
|---|---|---|
| | | **PCT/JP2022/048394** |

**A.     CLASSIFICATION OF SUBJECT MATTER**

*G02B 27/02*(2006.01)i; *G02B 5/18*(2006.01)i
FI:   G02B27/02 Z; G02B5/18

According to International Patent Classification (IPC) or to both national classification and IPC

**B.     FIELDS SEARCHED**

Minimum documentation searched (classification system followed by classification symbols)

G02B27/01; G02B27/02; G02B5/18; G02B5/32; H04N5/64

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | US 2009/0097122 A1 (MIRAGE INNOVATIONS LTD) 16 April 2009 (2009-04-16) | 1-2, 5-6, 14-20 |
| | paragraphs [0074]-[0241], fig. 2-12 | |
| Y | paragraphs [0074]-[0241], fig. 2-12 | 2-4, 7-13 |
| Y | US 2020/0166756 A1 (APPLE INC.) 28 May 2020 (2020-05-28) | 2-4, 7 |
| | paragraphs [0050]-[0060], fig. 6-7 | |
| Y | US 2017/0003504 A1 (VALLIUS, Tuomas et al.) 05 January 2017 (2017-01-05) | 8-13 |
| | paragraphs [0025]-[0038], fig. 5-11 | |
| A | JP 2020-507113 A (MAGIC LEAP, INC) 05 March 2020 (2020-03-05) | 1-20 |
| | entire text, all drawings | |
| A | US 2010/0321781 A1 (NOKIA CORPORATION) 23 December 2010 (2010-12-23) | 1-20 |
| | entire text, all drawings | |

☐ Further documents are listed in the continuation of Box C.          ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **27 January 2023** | **14 February 2023** |

| Name and mailing address of the ISA/JP | Authorized officer |
|---|---|
| **Japan Patent Office (ISA/JP)**
**3-4-3 Kasumigaseki, Chiyoda-ku, Tokyo 100-8915**
**Japan** | |
| | Telephone No. |

Form PCT/ISA/210 (second sheet) (January 2015)

INTERNATIONAL SEARCH REPORT
Information on patent family members

International application No.

**PCT/JP2022/048394**

| Patent document cited in search report | | | Publication date (day/month/year) | Patent family member(s) | | | Publication date (day/month/year) |
|---|---|---|---|---|---|---|---|
| US | 2009/0097122 | A1 | 16 April 2009 | WO | 2007/031991 | A2 | |
| US | 2020/0166756 | A1 | 28 May 2020 | WO | 2019/067100 | A1 | |
| | | | | CN | 111051938 | A | |
| US | 2017/0003504 | A1 | 05 January 2017 | WO | 2017/003674 | A1 | |
| | | | | CN | 107710051 | A | |
| JP | 2020-507113 | A | 05 March 2020 | US | 2018/0231702 | A1 | |
| | | | | entire text, all drawings | | | |
| | | | | WO | 2018/140651 | A1 | |
| | | | | EP | 3574348 | A1 | |
| | | | | CN | 110520763 | A | |
| US | 2010/0321781 | A1 | 23 December 2010 | WO | 2008/081070 | A1 | |
| | | | | CN | 101589326 | A | |

Form PCT/ISA/210 (patent family annex) (January 2015)

**EP 4 502 707 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019137777 A1